# EUROPÄISCHE PATENTSCHRIFT

(11) **EP 1 368 441 B1**
(45) Veröffentlichungstag und Bekanntmachung des Hinweises auf die Patenterteilung: **17.10.2007**
(21) Anmeldenummer: 02710851.3
(22) Anmeldetag: 13.02.2002
(51) Int. Cl.: C09D 151/00, C08F 291/00

(54) **VON FLÜCHTIGEN ORGANISCHEN STOFFEN IM WESENTLICHEN ODER VÖLLIG FREIER WÄSSRIGER BESCHICHTUNGSSTOFF, VERFAHREN ZU SEINER HERSTELLUNG UND SEINE VERWENDUNG**
AQUEOUS COATING SUBSTANCE THAT IS SUBSTANTIALLY OR COMPLETELY FREE OF VOLATILE ORGANIC SUBSTANCES, METHOD FOR PRODUCING THE SAME AND THE USE THEREOF
SUBSTANCE DE RECOUVREMENT AQUEUSE SENSIBLEMENT OU ENTIEREMENT EXEMPTE DE SUBSTANCES ORGANIQUES VOLATILES, PROCEDES PERMETTANT DE LA PRODUIRE ET SON UTILISATION

(30) Priorität: 13.02.2001 DE 10106566
(43) Veröffentlichungstag der Anmeldung: 10.12.2003
(73) Patentinhaber: BASF Coatings AG, 48165 Münster (DE)
(72) Erfinder: NICKOLAUS, Ralf, 48317 Drensteinfurt (DE); RINK, Heinz-Peter, 48153 Münster (DE); CLAUSS, Reinhold, 48565 Steinfurt (DE); WESSLING, Elisabeth, 48282 Emsdetten (DE); LÖCKEN, Wilma, 45721 Haltern (DE); BENDIX, Maximilian, 48165 Münster (DE); MIKOLAJETZ, Dunja, 59387 Ascheberg (DE)
(74) Vertreter: Leifert & Steffan
(86) Internationale Anmeldenummer: PCT/EP2002/001460
(87) Internationale Veröffentlichungsnummer: WO 2002/064692

(56) Entgegenhaltungen:
- EP-A- 0 429 207
- EP-A- 0 576 943
- EP-A- 0 755 946
- WO-A-97/49739
- DATABASE WPI Section Ch, Week 199606 Derwent Publications Ltd., London, GB; Class A14, AN 1996-056019 XP002199170 & JP 07 316242 A (TAISEI KAKO CO), 5. Dezember 1995 (1995-12-05)

## Beschreibung

Die vorliegende Erfindung betrifft einen neuen, von flüchtigen organischen Stoffen im wesentlichen oder völlig freien wäßrigen Beschichtungsstoff. Außerdem betrifft die vorliegende Erfindung ein neues Verfahren zur Herstellung von von flüchtigen organischen Stoffen im wesentlichen oder völlig freien wäßrigen Beschichtungsstoffen. Des weiteren betrifft die vorliegende Erfindung die Verwendung der neuen von flüchtigen organischen Stoffen im wesentlichen oder völlig freien wäßrigen Beschichtungsstoffen für die Automobilerstlackierung, die Lackierung von Bauwerken im Innen- und Außenbereich, die Lackierung von Türen, Fenstern und Möbeln, die industrielle Lackierung, inklusive Coil Coating, Container Coating und die Imprägnierung und/oder Beschichtung elektrotechnischer Bauteile, sowie die Lackierung von weißer Ware, inklusive Haushaltsgeräte, Heizkessel und Radiatoren.

Mikro- und Miniemulsionen sind Dispersionen aus Wasser, einer Ölphase und einer oder mehreren oberflächenaktiven Substanzen, die Tröpfchengrößen von 5 bis 50 nm (Mikroemulsionen) oder von 50 bis 500 nm aufweisen. Dabei gelten Mikroemulsionen als thermodynamisch stabil, wogegen die Miniemulsionen als metastabil angesehen werden (vgl. Emulsion Polymerization and Emulsion Polymers, Editoren. P. A. Lovell und Mohamed S. El-Aasser, John Wiley and Sons, Chichester, New York, Weinheim, 1997, Seiten 700 und folgende; Mohamed S. El-Aasser, Advances in Emulsion Polymerization and Latex Technology, 30th Annual Short Course, Volume 3, June 7-11, 1999, Emulsion Polymers Institute, Lehigh University, Bethlehem, Pennsylvania, U.S.A.). Beide Arten von Dispersionen finden in der Technik breite Anwendung beispielsweise in Reinigern, Kosmetika oder Körperpflegeprodukten. Sie können aber auch anstelle der üblichen Makroemulsionen, bei denen Tröpfchengrößen >1.000 nm vorliegen, für Polymerisationsreaktionen verwendet werden.

Die Herstellung wäßriger Primärdispersionen mit Hilfe der radikalischen Miniemulsionspolymerisation ist beispielsweise aus der internationalen Patentanmeldung WO 98/02466 oder den deutschen Patentschriften DE 196 28 143 A1 und DE 196 28 142 A1 bekannt. Bei diesen bekannten Verfahren können die Monomeren in der Gegenwart unterschiedlicher niedermolekularer, oligomerer oder polymerer hydrophober Substanzen, die auch als Costabilisatoren bezeichnet werden, copolymerisiert werden. Außerdem können hydrophobe, in Wasser wenig lösliche organische Hilfsmittel wie Weichmacher, Verbesserer der Klebrigkeit der resultierenden Verfilmung, Filmbildehilfsmittel oder sonstige nicht näher spezifizierte organische Additive in die Monomertröpfchen der Miniemulsion eingearbeitet werden. Die Verwendung der bekannten wäßrigen Primärdispersionen für die Herstellung von Beschichtungsstoffen geht aus den Patentschriften nicht hervor.

Wäßrige Beschichtungsstoffe, die durch Vermischen von
- wäßrigen Primärdispersionen, die feste Kern-Schale-Partikel enthalten und durch Mini- oder Mikroemulsionspolymerisation von Monomeren in der Gegenwart hydrophober Polymere hergestellt worden sind, und
- wäßrigen primären Dispersionen auf der Basis acrylierter Polyurethane
herstellbar sind, sind aus der internationalen Patentanmeldung WO 97/49739 bekannt. Diese bekannten wäßrigen Beschichtungsstoffe können darüber hinaus noch Vernetzungsmittel, Rheologiehilfsmittel, UV-Absorber, Katalysatoren, Füllstoffe und Pigmente enthalten. Die Verwendung regenerierbarer Radikalfänger als Lichtschutzmittel geht aus der internationalen Patentanmeldung nicht hervor. Die bekannten wäßrigen Beschichtungsstoffe werden in der Hauptsache in pigmentierter Form als Wasserbasislacke eingesetzt. Die Wasserbasislacke liefern farb- und/oder effektgebende Mehrschichtlackierungen, die eine gute Steinschlagbeständigkeit und eine gute Zwischenschichthaftung aufweisen. Als Klarlacke liefern sie indes Klarlackierungen, die keine ausreichende Witterungsbeständigkeit und Lichtbeständigkeit aufweisen. Bei dem Versuch, diese Nachteile durch die Zugabe von regenerierbaren Radikalfängern zu den bekannten wäßrigen Beschichtungsstoffen zu beheben, resultieren Klarlacke, die wenig lagerstabil sind und trübe, inhomogene Klarlackierungen liefern.

Aus der deutschen Patentanmeldung DE 199 14 896 A1 sind wäßrige Beschichtungsstoffe auf der Basis von wäßrigen sekundären Dispersionen von gesättigten und ungesättigten, ionisch, nichtionisch sowie ionisch und nichtionisch stabilisierten, ungepfropften und mit olefinisch ungesättigten Monomeren gepfropften Polyurethanen bekannt. Diese bekannten wäßrigen Beschichtungsstoffe können Radikalfänger enthalten. Es wird indes nicht angegeben, ob es sich dabei um regenerierbare oder um nicht regenerierbare Radikalfänger handelt. Außerdem können sie noch bis zu 50 Gew.-%, bezogen auf die Gesamtmenge der Bindemittel, eines oder mehrerer von den vorstehend genannten Polyurethanen verschiedener, hydroxylgruppenhaltiger Bindemittel, wie lineare und/oder verzweigte und/oder blockartig, kammartig und/oder statistisch aufgebaute Poly(meth)acrylate, Polyester, Polyurethane, acrylierte Polyurethane, acrylierte Polyester, Polylactone, Polycarbonate, Polyether, (Meth)Acrylatdiole oder Polyharnstoffe, enthalten. Es wird in der Patentanmeldung aber nicht angegeben, ob diese zusätzlichen Bindemittel in der Form von Miniemulsionen oder Mikroemulsion vorliegen bzw. eingearbeitet werden sollen.

In der nicht vorveröffentlichten deutschen Patentanmeldung DE 199 59 928.9 der BASF Coatings AG mit dem internen Aktenzeichen PAT 99 174 DE und dem Titel "Wäßrige Primärdispersionen und Beschichtungsstoffe, Verfahren zu ihrer Herstellung und ihre Verwendung" werden wäßrige Primärdispersionen und Beschichtungsstoffe beschrieben, die dispergierte und/oder emulgierte, feste und/oder flüssige Polymerpartikel und/oder dispergierte feste Kem-Schale-Partikel eines Teilchendurchmesser ≤ 500 nm enthalten und durch radikalische Mikro- oder Miniemulsionspolymerisation von mindestens einem olefinisch ungesättigten Monomer in der Gegenwart von zumindest einem hydrophoben Vernetzungsmittel für das aus dem Monomer oder den Monomeren resultierende (Co)Polymerisat herstellbar sind.

In der nicht vorveröffentlichten deutschen Patentanmeldung DE 199 59 927.0 der BASF Coatings AG mit dem internen Aktenzeichen PAT 99 173 DE und dem Titel "Wäßrige Primärdispersionen und Beschichtungsstoffe, Verfahren zu ihrer Herstellung und ihre Verwendung" werden wäßrige Primärdispersionen und Beschichtungsstoffe beschrieben, die dispergierte und/oder emulgierte, feste und/oder flüssige Polymerpartikel und/oder dispergierte feste Kern-Schale-Partikel eines Teilchendurchmesser ≤ 500 nm enthalten und durch radikalische Mikro- oder Miniemulsionspolymerisation von einem olefinisch ungesättigten Monomer und einem Diarylethylen herstellbar sind.

In der nicht vorveröffentlichten deutschen Patentanmeldung DE 199 24 674.2 der BASF Coatings AG mit dem internen Aktenzeichen PAT 99 198 DE und dem Titel "Wäßrige Primärdispersionen und Beschichtungsstoffe, Verfahren zu ihrer Herstellung und ihre Verwendung" werden wäßrige Primärdispersionen und Beschichtungsstoffe beschrieben, die dispergierte und/oder emulgierte, feste und/oder flüssige Polymerpartikel und/oder dispergierte feste Kem-Schale-Partikel eines Teilchendurchmesser ≤ 500 nm enthalten und durch radikalische Mikro- oder Miniemulsionspolymerisation von einem olefinisch ungesättigten Monomer und einem Diarylethylen in der Gegenwart von zumindest einem hydrophoben Vernetzungsmittel für das aus den Monomeren resultierende Copolymerisat herstellbar sind.

In der nicht vorveröffentlichten deutschen Patentanmeldung DE 100 05 814.1 der BASF Coatings AG mit dem internen Aktenzeichen PAT 00 253 DE und dem Titel "Wäßrige Primärdispersionen, Verfahren zu ihrer Herstellung und ihre Verwendung" werden wäßrige Primärdispersionen und Beschichtungsstoffe beschrieben, die dispergierte und/oder emulgierte, feste und/oder flüssige Polymerpartikel und/oder dispergierte feste Kern-Schale-Partikel eines Teilchendurchmesser ≤ 500 nm enthalten und durch radikalische Mikro- oder Miniemulsionspolymerisation von mindestens einem olefinisch ungesättigten Monomer in der Gegenwart mindestens eines polyhydroxyfunktionalisierten cyclischen und/oder acyclischen Alkans mit 9 bis 16 Kohlenstoffatomen im Molekül herstellbar sind.

In der nicht vorveröffentlichten deutschen Patentanmeldung DE 100 18 601.7 der BASF Coatings AG mit dem internen Aktenzeichen PAT 00 256 DE und dem Titel "Wäßrige Primärdispersionen und Beschichtungsstoffen, Verfahren zu ihrer Herstellung und ihre Verwendung" werden wäßrige Primärdispersionen und Beschichtungsstoffe beschrieben, die dispergierte und/oder emulgierte, feste und/oder flüssige Polymerpartikel und/oder dispergierte feste Kem-Schale-Partikel eines Teilchendurchmesser ≤ 500 nm enthalten und durch radikalische Mikro- oder Miniemulsionspolymerisation von mindestens einem olefinisch ungesättigten Monomer in der Gegenwart von zumindest einem hydrophoben Vernetzungsmittel für das aus dem Monomer oder den Monomeren resultierende (Co)Polymerisat, wobei man das Monomer oder die Monomeren vor der (Co)Polymerisation in einer wäßrigen Dispersion des Vernetzungsmittels oder der Vernetzungsmittel dispergiert.

Den in den vorstehend aufgeführten nicht vorveröffentlichten deutschen Patentanmeldungen beschriebenen wäßrigen Beschichtungsstoffen können lackübliche Zusatzstoffe wie Lichtschutzmittel, UV-Absorber, Radikalfänger oder sekundäre wäßrige Dispersionen von Polyurethanen und acrylierten Polyurethanen, wie die in den Patentschriften EP 0 521 928 A1, EP 0 522 420 A1 , EP 0 522 419 A1, EP 0 730 613 A1 oder DE 44 37 535 A1 beschriebenen, zugesetzt werden. Dabei werden diese lacküblichen Zusatzstoffe den wäßrigen Primärdispersionen vor, während und/oder nach ihrer Herstellung zugesetzt. Ein Eintrag von regenerierbaren Radikalfängern über Dispersionen von Polyurethanen und acrylierten Polyurethanen wird in den Patentanmeldungen nicht beschrieben.

Aufgabe der vorliegenden Erfindung ist es, einen neuen, von flüchtigen organischen Stoffen im wesentlichen oder völlig freien wäßrigen Beschichtungsstoff auf der Basis von
(A) mindestens eine wässrige Primärdispersion, enthaltend dispergierte und/oder emulgierte, feste und/oder flüssige Polymerpartikel und/oder dispergierte feste Kern-Schale-Partikel eines Teilchendurchmesser ≤ 500 nm, herstellbar durch radikalische Mikro- oder Miniemulsionspolymerisation mindestens eines olefinisch ungesättigten Monomeren in der Gegenwart mindestens eines hydrophoben Zusatzstoffs,
   und
(B) mindestens eine wäßrige Polyurethandispersion, enthaltend mindestens ein Polyurethan,
   zu finden, der die Nachteile des Standes der Technik nicht mehr länger aufweist, sondern lagerstabil ist und Beschichtungen oder Lackierungen liefert, die witterungsstabil, lichtstabil und frei von Trübungen und Inhomogenitäten sind.

Demgemäß wurde der neue, von flüchtigen organischen Stoffen im wesentlichen oder völlig freie wäßrige Beschichtungsstoff gefunden, der herstellbar ist, indem man
(A) mindestens eine wässrige Primärdispersion, enthaltend dispergierte und/oder emulgierte, feste und/oder flüssige Polymerpartikel und/oder dispergierte feste Kern-Schale-Partikel eines Teilchendurchmesser ≤ 500 nm, herstellbar durch radikalische Mikro- oder Miniemulsionspolymerisation mindestens eines olefinisch ungesättigten Monomeren in der Gegenwart mindestens eines hydrophoben Zusatzstoffs,
   und
(B) mindestens eine sekundäre wäßrige Polyurethandispersion, enthaltend mindestens ein Polyurethan und mindestens ein Lichtschutzmittel, ausgewählt aus der Gruppe der regenerierbaren Radikalfänger,
   miteinander vermischt.

Im folgenden wird der neue, von flüchtigen organischen Stoffen im wesentlichen oder völlig freie wäßrige Beschichtungsstoff als "erfindungsgemäßer Beschichtungsstoff" bezeichnet.

Außerdem wurde das neue Verfahren zur Herstellung eines von flüchtigen organischen Stoffen im wesentlichen oder völlig freien wäßrigen Beschichtungsstoffs gefunden, bei dem man
(I) mindestens eine wässrige Primärdispersion (A), enthaltend dispergierte und/oder emulgierte, feste und/oder flüssige Polymerpartikel und/oder dispergierte feste Kern-Schale-Partikel eines Teilchendurchmesser ≤ 500 nm, durch radikalische Mikro- oder Miniemulsionspolymerisation mindestens eines olefinisch ungesättigten Monomeren in der Gegenwart mindestens eines hydrophoben Zusatzstoffs herstellt,
(II) mindestens eine sekundäre wäßrige Polyurethandispersion (B), enthaltend mindestens ein Polyurethan und mindestens ein Lichtschutzmittel, ausgewählt aus der Gruppe der regenerierbaren Radikalfänger, herstellt und
(III) die Dispersionen (A) und (B) miteinander vermischt.

Im folgenden wird das neue Verfahren zur Herstellung eines von flüchtigen organischen Stoffen im wesentlichen oder völlig freien wäßrigen Beschichtungsstoffs als "erfindungsgemäßes Verfahren" bezeichnet.

Weitere erfindungsgemäße Gegenstände gehen aus der nachfolgenden Beschreibung hervor.

Die wäßrigen Primärdispersionen (A) enthalten dispergierte und/oder emulgierte feste und/oder flüssige Polymerpartikel und/oder dispergierte feste Kem-Schale-Partikel. Die Größe der Polymerpartikel oder der dispergierten Kem-Schale-Partikel ergibt sich direkt aus dem nachfolgend beschriebenen erfindungsgemäßen Verfahren. Hierbei liegt der mittlere Teilchendurchmesser unter 500 nm. Vorzugsweise liegt er bei 10 bis 500 nm, bevorzugt 50 bis 400 nm und ganz besonders bevorzugt 100 bis 350 nm.

Die wäßrigen Primärdispersionen (A) weisen einen vorteilhaft hohen Feststoffgehalt, beispielsweise von über 20 Gew.-%, bevorzugt über 30 Gew.-%, auf. Es können sogar Feststoffgehalte von über 40 Gew.-% erzielt werden. Die wäßrigen Primärdispersionen (A) haben eine geringe Viskosität, auch bei hohem Feststoffgehalt, was einen weiteren besonderen Vorteil der Primärdispersionen (A) und der hieraus hergestellten erfindungsgemäßen Beschichtungsstoffe darstellt.

Die Kern-Schale-Partikel resultieren aus der Pfropfmischpolymerisation organischer Feststoffe und der nachstehend beschriebenen Monomeren. Vorzugsweise handelt es sich bei den organischen Feststoffen um hydrophobe Polymere, wie sie beispielsweise in den Patentschriften EP 0 401 565 A1, Seite 3, Zeilen 5, bis Seite 4, Zeile 50, WO 97/49739, Seite 4, Zeilen 19, bis Seite 5, Zeile 3, oder EP 0 755 946 A1, Seite 3, Zeile 26, bis Seite 5, Zeile 38, beschrieben werden. Diese hydrophoben Polymere können auch durch Miniemulsionpolymerisation hergestellt werden.

Die wäßrigen Primärdispersionen (A) können auch eine bimodale Teilchengrößenverteilung aufweisen, bei der 0,1 bis 80 Gew.-%, insbesondere 1,0 bis 50 Gew.-%, der aus den Monomeren resultierenden (Co)Polymerisaten eine Teilchengröße, bestimmt mit einer analytischen Ultrazentrifuge, von 20 bis 500 nm, insbesondere 50 bis 300 nm haben, und 20 bis 99,9 Gew.-%, insbesondere 50 bis 99 Gew.-% des Copolymerisats, eine Teilchengröße von 200 bis 1.500 nm, insbesondere 300 bis 900 nm haben, wobei sich die Teilchengrößen um mindestens 50 nm, insbesondere um mindestens 100 nm, ganz besonders bevorzugt um mindestens 200 nm unterscheiden. Hinsichtlich der Meßmethode wird ergänzend auf die Zeilen 5 bis 9, der Seite 6 der deutschen Patentanmeldung DE 196 28 142 A1 verwiesen.

Die wesentliche Ausgangsverbindung für die Herstellung der wäßrigen Primärdispersionen (A) und für das erfindungsgemäße Verfahren ist mindestens ein olefinisch ungesättigtes Monomer.

Vorzugsweise werden mindestens zwei, insbesondere mindestens drei, unterschiedliche Monomere, miteinander copolymerisiert.

Besonders bevorzugt werden die Monomeren durch die kontrollierte radikalische Mikro- oder Miniemulsionspolymerisatione, insbesondere Miniemulsionpolymerisation, copolymerisiert. Zu diesem Zweck wird mindestens eines der Monomeren aus der Gruppe, bestehend aus den Monomeren der allgemeinen Formel I

**R¹R²C=CR³R⁴** (I),

ausgewählt.

In der allgemeinen Formel I stehen die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, - Propyl- oder -Butylcyclohex-1-yl.

Beispiele geeigneter Arylreste sind Phenyl, Naphthyl oder Biphenylyl, vorzugsweise Phenyl und Naphthyl und insbesondere Phenyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für besonders bevorzugt verwendete Monomere I sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Die vorstehend beschriebenen Monomeren I können einzeln oder als Gemisch aus mindestens zwei Monomeren I verwendet werden.

Sofern verwendet, liegt der Anteil der vorstehend beschriebenen Monomeren I an dem Monomerengemisch, jeweils bezogen auf das Monomerengemisch, vorzugsweise bei 0,01 bis 10, bevorzugt bei 0,1 bis 9,0, besonders bevorzugt bei 0,15 bis 8,0, ganz besonders bevorzugt 0,2 bis 7,0 und insbesondere 0,25 bis 6,0 Gew.-%.

Hinsichtlich der Reaktionsführung und der Eigenschaften der resultierenden Copolymerisate, insbesondere der Acrylatcopolymerisate, ist Diphenylethylen von ganz besonderem Vorteil und wird deshalb ganz besonders bevorzugt verwendet.

Für das erfindungsgemäße Verfahren hat die Mitverwendung mindestens eines Monomers I noch den zusätzlichen wesentlichen Vorteil, daß die Herstellung der wäßrigen Primärdispersionen (A) in Batch-Fahrweise durchgeführt werden kann, ohne daß hierbei eine Überhitzung der Reaktionsmischung oder gar ein Durchgehen des Reaktors eintritt.

Desweiteren ist es von Vorteil, wenn mindestens eines der Monomeren, die von den Monomeren I verschieden sind, reaktive funktionelle Gruppen (a) enthält, die mit Gruppen der eigenen Art oder mit komplementären reaktiven funktionellen Gruppen (b) thermisch initiierte Vernetzungsreaktionen eingehen können. Diese reaktiven funktionellen Gruppen (a) oder (b) oder (a) und (b) können in den (Co)Polymerisaten vorliegen, die aus den nachstehend beschriebenen Monomeren oder aus den nachstehend beschriebenen Monomeren und den vorstehend beschriebenen Monomeren I resultieren, die demgemäß selbstvernetzende Eigenschaften haben. Dem entsprechend sind auch die betreffenden wäßrigen Primärdispersionen (A) und die hieraus hergestellten erfindungsgemäßen Beschichtungsstoffe selbstvernetzend.

Die komplementären reaktiven funktionellen Gruppen (b) können aber auch in den nachstehenden beschriebenen Vernetzungsmitteln vorliegen, die den wäßrigen Primärdispersionen (A) vor, während und/oder nach, insbesondere vor, ihrer Herstellung zugegeben werden. Die betreffenden wäßrigen Primärdispersionen (A) und die hieraus hergestellten erfindungsgemäßen Beschichtungsstoffe sind somit fremdvernetzend.

Zu den Begriffen "selbstvernetzend" und "fremdvernetzend" wird noch ergänzend auf Römpp Lexikon Lacke und Druckfarben, Georg Thieme Verlag, Stuttgart, New York, 1998, »Härtung«, Seiten 274 bis 276, verwiesen.

Beispiele geeigneter komplementärer reaktiver funktioneller Gruppen (a) und (b) sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

**Übersicht: Beispiele komplementärer funktioneller Gruppen (a) und (b)**

| **(a) Monomer** | **und** | **(b) Vernetzungsmittel** |
|---|---|---|
| | **oder** | |

| **(a) Vernetzungsmittel** | **und** | **(b) Monomer** |
|---|---|---|
| -SH | | -C(O)-OH |
| -NH₂ | | -C(O)-O-C(O)- |
| -OH | | -NCO |
| -O-(CO)-NH-(CO)-NH₂ | | -NH-C(O)-OR |
| -O-(CO)-NH₂ | | -CH₂-OH |
| >NH | | -CH₂-O-R |
| | | -NH-CH₂-OH |
| | | -NH-CH₂-O-R |
| | | -N(-CH₂-O-R)₂ |
| | | -NH-C(O)-CH(-C(O)OR)₂ |
| | | -NH-C(O)-CH(-C(O)OR)(-C(O)-R) |
| | | -NH-C(O)-NR'R" |
| | | >Si(OR)₂ |
| | | 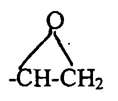 |
| -C(O)-OH | | 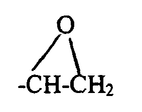 |

Die Auswahl der jeweiligen komplementären Gruppen (a) oder (b) oder (a) und (b) richtet sich zum einen danach, daß sie bei der Lagerung wäßrigen Primärdispersionen (A) keine unerwünschten Reaktionen eingehen und/oder gegebenenfalls eine zusätzliche Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Beschichtungsstoffen Vernetzungstemperaturen von Raumtemperatur bis 180 °C angewandt. Es werden daher vorzugsweise Monomere mit Thio-, Hydroxyl-, Methylol-, Methylolether, N-Methylol- N-Alkoxymethylamino-, Imino-, Carbamat-, Allophanat- und/oder Carboxylgruppen, insbesondere aber Amino-, Alkoxymethylamino- oder Hydroxylgruppen, speziell Hydroxylgruppen, einerseits und Vernetzungsmittel mit Anhydrid-, Carboxy-, Epoxy-, blockierten Isocyanat-, Urethan-, Methylol-, Methylolether-, N-Methylol- N-Alkoxymethylamino-, Siloxan-, Amino-, Hydroxy- und/oder beta-Hydroxyalkylamidgruppen, insbesondere aber blockierte Isocyanat-, Urethan- oder Methylolethergruppen, andererseits angewandt. Für die Herstellung selbstvernetzender erfindungsgemäßer Primärdispersionen werden vorzugsweise Methylol-, Methylolether, N-Methylol- N-Alkoxymethylaminogruppen eingesetzt.

Desweiteren können Monomere verwendet werden, die von den vorstehend beschriebenen Monomeren I und den vorstehend beschriebenen Monomeren, die reaktive funktionelle Gruppen enthalten, verschieden sind. Vorzugsweise enthalten diese Monomeren keine reaktiven funktionellen Gruppen. Diese Monomeren können, abgesehen von Monomeren (3), auch als die alleinigen Monomeren dienen.

Beispiele geeigneter Monomere, die reaktive funktionelle Gruppen oder keine reaktiven funktionellen Gruppen enthalten und die von den vorstehend beschriebenen Monomeren I verschieden sind, sind
(1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate führen.
(2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, - fumarat oder -itaconat; oder Hydroxycycloalkylester wie 1,4-Bis(hydroxymethyl)cyclohexan-, Octahydro-4,7-methano-1 H-indendimethanol- oder Methylpropandiolmonoacrylat, -monomethacrylat, - monoethacrylat, -monocrotonat, -monomaleinat, -monofumarat oder - monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di- oder -triallylether (hinsichtlich dieser höherfunktionellen Monomeren (2) gilt das für die höherfunktionellen Monomeren (1) Gesagte sinngemäß); Aminoethylacrylat, Aminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und - methacrylat;
(3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremo-no(meth)acryloyloxyethylester. Im Rahmen der vorliegenden Erfindung werden die Monomeren (3) vorzugsweise nicht als die alleinigen Monomeren verwendet, sondern stets in Verbindung mit anderen Monomeren und dies auch nur in solch geringen Mengen, daß die Monomeren (3) nicht außerhalb der Tröpfchen der Miniemulsion polymerisieren.
(4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Düsobutylen. Die Vinylester (4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren (vgl. Römpp Lexikon Lacke und Druckfarben, Georg Thieme Verlag, Stuttgart, New York, 1998, »Versatic®-Säuren«, Seiten 605 und 606), eingesetzt.
(5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
(6) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
(7) (Meth)Acrylsäureamide wie (Meth)Acrylsäureamid, N-Methyl-, N-Ethyl-, N-Propyl-, N-Butyl-, N-Cyclohexyl-, und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
(8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
(9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alpha-methylstyrol (alle Isomere) und/oder p-Vinylbenzsolsulfonsäure.
(10) Nitrile wie Acrylnitril und/oder Methacrylnitril.
(11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
(12) Allylverbindungen, insbesondere Allylether und -ester wie Allylmethyl-, - ethyl-, -propyl- oder -butylether oder Allylacetat, -propionat oder -butyrat.
(13) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2) und/oder
(14) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,014 A1 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind.

Weitere Beispiele geeigneter Monomere gehen aus der deutschen Patentanmeldung DE 196 28 142 A1, Seite 2, Zeile 50, bis Seite 3, Zeile 7, hervor.

Vorzugsweise werden die Monomeren so ausgewählt, daß (Meth)Acrylatcopolymerisate resultieren, deren Eigenschaftsprofil in erster Linie von den vorstehend beschriebenen (Meth)Acrylaten bestimmt wird. Als Comonomere werden dann bevorzugt vinylaromatische Kohlenwasserstoffe (9), insbesondere Styrol, verwendet.

Die vorstehend beschriebenen Monomere werden in Gegenwart mindestens eines wasser- und/oder öllöslichen, Radikale bildenden Initiators zu Copolymerisaten umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Peroxodicarbonate wie Bis(4-tert.-butylcyclohexyl)peroxydicarbonat; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Weitere Beispiele geeigneter Initiatoren werden in der deutschen Patentanmeldung DE 196 28 142 A1, Seite 3, Zeile 49, bis Seite 4, Zeile 6, beschrieben. Es können auch Kombinationen dieser Initiatoren eingesetzt werden.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren und des Initiators, besonders bevorzugt 0,2 bis 20 Gew.-%, ganz besonders bevorzugt 0,5 bis 15 Gew.-% und insbesondere 1,0 bis 13 Gew.-% beträgt.

Die vorstehend beschriebenen Monomeren werden in der Gegenwart mindestens eines hydrophoben Zusatzstoffes polymerisiert oder copolymerisiert.

Unter der Eigenschaft "hydrophob" ist die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Vorzugsweise werden die hydrophoben Zusatzstoffe aus der Gruppe, bestehend aus,
(1) mindestens einem hydrophoben Vernetzungsmittel, ausgewählt aus der Gruppe, bestehend aus mindestens einem Vernetzungsmittel für das aus den Monomeren resultierende (Co)Polymerisat der wäßrigen Primärdispersion (A) und mindestens einem Vernetzungsmittel für das Polyurethan der sekundären wäßrigen Polyurethandispersion (B);
(2) mindestens einem polyhydroxyfunktionalisierten cyclischen und acyclischen Alkan mit 9 bis 16 Kohlenstoffatomen im Molekül sowie
(3) mindestens einer hydrophoben Verbindung, ausgewählt aus der Gruppe, bestehend aus Estern von 3 bis 6 Kohlenstoffatomen aufweisenden alpha,beta-monoolefinisch ungesättigten Carbonsäuren mit Alkoholen mit 12 bis 30 Kohlenstoffatomen im Alkylrest; Estern von Vinyl- und/oder Allylalkohol mit 12 bis 30 Kohlenstoffatome im Molekül aufweisenden Alkanmonocarbon-, sulfon- und/oder phosphonsäuren; Amiden von 3 bis 6 Kohlenstoffatome aufweisenden alpha, beta-monoolefinisch ungesättigten Carbonsäuren mit Alkylaminen mit 12 bis 30 Kohlenstoffatomen im Alkylrest; Makromomeren auf der Basis olefinisch ungesättigter Verbindungen mit im statistischen Mittel mindestens einer, insbesondere endständigen, olefinisch ungesättigten Gruppe im Molekül; Polysiloxanmakromonomeren mit im statstischen Mittel mindestens einer, insbesondere endständigen, olefinisch ungesättigten Gruppe im Molekül; oligomere und/oder polymere Polymerisations-, Polykondensations- und/oder Polyadditionsprodukten; wasserunlöslichen Molekulargewichtsreglem, insbesondere Mercaptane; aliphatischen, cycloaliphatischen und/oder aromatischen halogenierten und/oder nicht halogenierten Kohlenwasserstoffen; Alkanolen und/oder Alkylaminen mit mindestens 12 Kohlenstoffatomen im Alkylrest; Organosilanen und/odersiloxanen; pflanzlichen, tierischen, halbsynthetischen und/oder synthetischen Ölen; und/oder hydrophoben Farbstoffen;
ausgewählt, von denen die hydrophoben Vernetzungsmittel und die polyhydroxyfunktionalisierten cyclischen und acyclischen Alkane mit 9 bis 16

Kohlenstoffatomen im Molekül vorteilhaft sind und deshalb bevorzugt verwendet werden.

Besonders bevorzugt werden die Monomeren in der Gegenwart mindestens eines hydrophoben Vernetzungsmittels (co)polymerisiert, das die vorstehend beschriebenen reaktiven funktionellen Gruppen (a) oder (b) enthält, die mit den in den resultierenden (Co)Polymerisaten vorhandenen komplementären reaktiven funktionellen Gruppen (a) oder (b) Vernetzungsreaktionen eingehen. Die resultierenden wäßrigen Primärdispersionen und die daraus hergestellten erfindungsgemäßen Beschichtungsstoffe enthalten die Vernetzungsmittel in besonders guter Verteilung, weswegen die Vernetzungsreaktionen besonders gut ablaufen, so daß weniger Vernetzungsmittel verwendet werden können als in den Beschichtungsstoffen, die nach Verfahren des Standes der Technik hergestellt worden sind.

Beispiele besonders gut geeigneter hydrophober Vernetzungsmittel sind blockierte Polyisocyanate, Tris(alkoxycarbonylamino)triazine oder vollständig veretherte Aminoplastharze.

Beispiele geeigneter Blockierungsmittel für die Herstellung der blockierten Polyisocyanate sind die aus der US-Patentschrift US 4,444,954 A bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoffoder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol, oder Triazole; sowie
xvii) Gemische dieser Blockierungsmittel, insbesondere Dimethylpyrazol und Triazole, Malonester und Acetessigsäureester oder Dimethylpyrazol und Succinimid.

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit 2 bis 5 Isocyanatgruppen pro Molekül und mit Viskositäten von 100 bis 10.000, vorzugsweise 100 bis 5000.

Beispiele geeigneter zu blockierender Polyisocyanate sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden zur Herstellung der zu blockierenden Polyisocyanate aliphatische oder cycloaliphatische Diisocyanate, insbesondere Hexamethylendiisocyanat, Isophorondiisocyanat, Dicyclohexylmethan-2,4'-diisocyanat, Dicyclohexylmethan-4,4'-diisocyanat, Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden insbesondere 2-Heptyl-3,4-bis(9-isocyanatononyl)-1-pentylcyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethylheptan oder 1-Isocyanato-2-(3-isocyanatopropyl)cyclohexan oder Mischungen hieraus eingesetzt.

Die Diisocanate können als solche ebenfalls zur Herstellung blockierter Diisocyanate verwendet werden. Vorzugsweise werden sie indes nicht alleine, sondern im Gemisch mit den Polyisocyanaten verwendet.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt.

Beispiele für besonders gut geeignete vollständig veretherte Aminoplastharze sind Melaminharze, Guanaminharze oder Harnstoffharze. Hierbei kann jedes für Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4 710 542 A1 und EP 0 245 700 B1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Die besonders gut geeigneten Tris(alkoxycarbonylamino)triazine wiesen die folgende Formel auf:

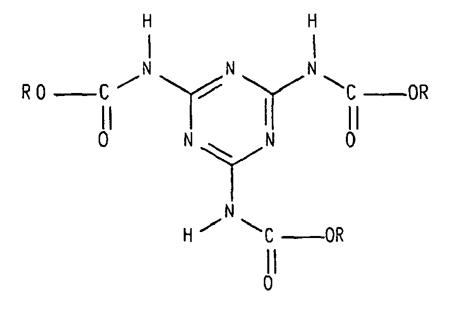

Beispiele für besonders gut geeignete Tris(alkoxycarbonylamino)triazine werden in den Patentschriften US 4,939,213 A, US 5,084,541 A oder der EP 0 624 577 A 1 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Von den vorstehend beschriebenen Vernetzungsmitteln bieten die blockierten Polyisocyanate besondere Vorteile und werden deshalb erfindungsgemäß ganz besonders bevorzugt verwendet.

Bei dem erfindungsgemäßen Verfahren kann das Verhältnis der Monomeren, die komplementäre reaktive funktionelle Gruppen (a) oder (b) enthalten, zu den Vernetzungsmitteln sehr breit variieren. Erfindungsgemäß ist es von Vorteil, wenn das Molverhältnis von komplementären reaktiven funktionellen Gruppen (a) oder (b) in den Copolymerisaten zu komplementären reaktiven funktionellen Gruppen (a) oder (b) in den Vernetzungsmitteln bei 5,0 : 1,0 bis 1,0 : 5,0, bevorzugt 4,0 : 1,0 bis 1,0 : 4,0, besonders bevorzugt 3,0 : 1,0 bis 1,0 : 3,0 und insbesondere 2,0 : 1 bis 1 : 2,0 liegt. Besondere Vorteile resultieren, wenn das Molverhältnis bei etwa oder genau 1,0 : 1,0 liegt.

Die funktionalisierten Alkane leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder Isopropylcyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-n-propyl-cyclohexan.

Beispiele geeigneter Alkane dieser Art mit 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyl-octan, 1 '-Ethyl-butyl-cyclohexan, 3,5-Diethyl-octan oder 2,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dimethyl-7-ethyl-decan.

Beispiele geeigneter Alkane dieser Art mit 15 Kohlenstoffatomen sind 3,6-Diethyl-undecan oder 3,6-Dimethyl-9-ethyl-undecan.

Beispiele geeigneter Alkane dieser Art mit 16 Kohlenstoffatomen sind 3,7-Diethyl-dodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate ganz besonders vorteilhaft.

Für die Erfindung ist es vorteilhaft, wenn die funktionalisierten Alkane einen Siedepunkt von über 200, vorzugsweise 220 und insbesondere 240°C aufweisen. Darüberhinaus sollen sie eine niedrige Verdampfungsrate haben.

Für die erfindungsgemäßen Beschichtungsstoffe ist es von Vorteil, wenn die funktionalisierten Alkane acyclisch sind.

Die funktionalisierten Alkane weisen im allemeinen primäre und/oder sekundäre Hydroxylgruppen auf. Für die erfindungsgemäßen Beschichtungsstoffe ist es von Vorteil, wenn primäre und sekundäre Gruppen in einer Verbindung vorhanden sind.

Ganz besonders vorteilhafte erfindungsgemäße Beschichtungsstoffe werden erhalten, wenn die Diole stellungsisomere Dialkyloctandiole, insbesondere stellungsisomeren Diethyloctandiole, sind.

Die erfindungsgemäß zu verwendenden stellungsisomeren Diethyloctandiole enthalten eine lineare C₈-Kohlenstoffkette.

Bezüglich der beiden Ethylgruppen weist die C₈-Kohlenstoffkette das folgende Substitutionsmuster auf: 2,3, 2,4, 2,5, 2,6, 2,7, 3,4, 3,5, 3,6 oder 4,5. Erfindungsgemäß ist es von Vorteil, wenn die beiden Ethylgruppen in 2,4-Stellung stehen, d. h., daß es sich um 2,4-Diethyloctandiole handelt.

Bezüglich der beiden Hydroxylgruppen weist die C₈-Kohlenstoffkette das folgende Substitutionsmuster auf: 1,2, 1,3,1,4, 1,5, 1,6, 1,7, 1,8, 2,3, 2,4, 2,5, 2,6, 2,7, 2,8, 3,4, 3,5, 3,6, 3,7, 3,8, 4,5, 4,6, 4,8, 5,6, 5,7, 5,8, 6,7, 6,8 oder 7,8.

Erfindungsgemäß ist es von Vorteil, wenn die beiden Hydroxylgruppen in 1,5-Stellung stehen, d. h., daß es sich um Diethyloctan-1,5-diole handelt.

Die beiden Substitutionsmuster werden in beliebiger Weise miteinander kombiniert, d. h., daß es sich bei den erfindungsgemäß zu verwendenden Diethyloctandiolen um
2,3-Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol,
2,4-Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol,
2,5-Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol,
2,6- Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol,
2,7- Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7., -4,8-, -5,6 -, - 5,7-, -5,8-, -6,7-, -6,8- oder -7,8-diol,
3,4-Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol,
3,5-Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol,
3,6-Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol oder um
4,5-Diethyloctan-1,2-, -1,3-, -1,4-, -1,5-, -1,6-, -1,7-, -1,8-, -2,3-, -2,4-, -2,5 -, - 2,6-, -2,7-, -2,8-, -3,4-, -3,5-, -3,6-, -3,7-, -3,8 -, -4,5-, -4,6-, -4,7-, -4,8-, -5,6 -, - 5,7-, -5,8-, -6,7-, -6,8- oder -7,8-diol handelt.

Die stellungsisomeren Diethyloctandiole können als einzelne Verbindungen oder als Gemische von zwei oder mehr Diethyloctandiolen verwendet werden.

Ganz besondere Vorteile resultieren aus der Verwendung von 2,4-Diethyloctan-1,5-diol.

Die bevorzugt verwendeten stellungsisomeren Diethyloctandiole sind an sich bekannte Verbindungen und können mit Hilfe üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethyl-hexanol an.

Die Menge an funktionalisierten Alkanen, die bei der Herstellung der wäßrigen Primärdispersionen (A) angewandt werden, kann sehr breit variieren und richtet sich nach den Erfordernisssen des jeweiligen Einzelfalls. D.h., nach oben ist die Menge vor allem dadurch begrenzt, daß die Bildung der Mikro- oder Miniemulsion nicht erschwert und/oder ihre Stabilität nicht verringert und/oder die (Co)Polymerisation der Monomeren nicht nachteilig beeinflußt werden darf. Nach unten ist die Menge dadurch begrenzt, daß soviel an funktionalisierten Alkanen verwendet werden muß, daß sich ihre technischen Effekte zuverlässig einstellen. Vorzugsweise werden die funktionalisierten Alkane in einer Menge von, bezogen auf die Gesamtmenge der betreffenden wässrigen Primärdispersion (A), 0,1 bis 20, bevorzugt 0,2 bis 18, besonders bevorzugt 0,3 bis 15, ganz besonders bevorzugt 0,4 bis 13 und insbesondere 0,5 bis 10 Gew.-% verwendet.

Des weiteren können die Monomeren in der Gegenwart von Emulgatoren und/oder Schutzkolloiden (co)polymerisiert werden. Beispiele geeigneter Emulgatoren und/oder Schutzkolloide sowie die Mengen, in denen sie vorteilhafterweise angewandt werden, gehen aus der deutschen Patentanmeldung DE 196 28 142 A1, Seite 3, Zeilen 8 bis 48, hervor.

Hinsichtlich der Molekulargewichtsverteilung sind die aus den Monomeren gebildeten (Co)Polymerisate keinerlei Beschränkungen unterworfen. Vorteilhafterweise wird aber die (Co)Polymerisation so geführt, daß eine Molekulargewichtsverteilung Mw/Mn gemessen mit Gelpermeationschromatographie unter Verwendung von Polystyrol als Standard von ≤ 10, besonders bevorzugt ≤ 7 und insbesondere ≤ 4 resultiert.

Werden die Monomere I mit verwendet, ergibt sich als noch ein weiterer zusätzlicher Vorteil, daß nämlich die Molekulargewichte der Copolymerisate durch die Wahl des Verhältnisses von Monomer zu Monomer I zu radikalischem Initiator in weiten Grenzen steuerbar sind. Dabei bestimmt insbesondere der Gehalt an Monomer I das Molekulargewicht, und zwar derart, daß je größer der Anteil an Monomer I ist, desto geringer ist das erhaltene Molekulargewicht.

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 198 28 742 A1 oder EP 0 498 583 A1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt (vgl. die deutsche Patentanmeldung DE 198 28 742 A1).

Die (Co)polymerisation wird in einem wäßrigen Medium durchgeführt.

Das wäßrige Medium enthält im wesentlichen Wasser. Hierbei kann das wäßrige Medium außer den vorstehend im Detail beschriebenen hydrophoben Zusatzstoffen sowie gegebenenfalls den vorstehend beschriebenen Emulgatoren und/oder Schutzkolloiden noch die nachstehend beschriebenen lacküblichen Zusatzstoffe und/oder sonstige gelöste organische und/oder anorganische, nieder- und/oder hochmolekulare Stoffe in untergeordneten Mengen enthalten, sofern diese nicht die (Co)Polymerisation in negativer Weise beeinflussen oder gar hemmen und/oder in den erfindungsgemäßen Beschichtungsstoffen eine Emission von flüchtigen organischen Stoffen bewirken. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Die (Co)Polymerisation wird vorteilhafterweise bei Temperaturen oberhalb der Raumtemperatur durchgeführt, wobei bevorzugt ein Temperaturbereich von 30 bis 95°C, ganz besonders bevorzugt 40 bis 90°C, gewählt wird.

Bei Verwendung besonders leicht flüchtiger Monomere kann die (Co)Polymerisation auch unter Druck, vorzugsweise unter 1,5 bis 3.000 bar, besonders bevorzugt 5 bis 1.500 und insbesondere 10 bis 1.000 bar durchgeführt werden. Hierbei können in Einzelfällen auch höhere Temperaturen als 95°C angewandt werden.

Hierbei erweist sich als besonderer Vorteil des erfindungsgemäßen Verfahrens, daß es auch in batch-Fahrweise durchgeführt werden kann. Ansonsten können auch die in der deutschen Patentanmeldung DE 196 28 142 A1, Seite 4, Zeilen 6 bis 36, beschriebenen Fahrweisen angewandt werden.

Die (Co)Polymerisation wird in einer Mikro- oder Miniemulsion, insbesondere einer Miniemulsion, durchgeführt. Hierbei liegt der mittlere Teilchendurchmesser der emulgierten Monomertröpfchen unter 500 nm. Vorzugsweise liegt er bei 10 bis 500 nm, bevorzugt 50 bis 400 nm und ganz besonders bevorzugt 100 bis 350 nm. Bei dem Teilchendurchmesser handelt es sich um den sogenannten z-mittleren Teilchendurchmesser, der mittels der Photonenkorrelationsspektroskopie nach dem Prinzip der dynamischen, quasielastischen Lichtstreuung bestimmt wird. Hierfür kann beispielsweise ein Coulter N4 Plus Particle Analyzer der Firma Coulter Scientific Instruments oder ein PCS Malvern Zetasizer 1000 benutzt werden. Üblicherweise wird die Messung an einer wäßrigen Emulsion, welche 0,01 Gew.-% der emulgierten Monomertröpfchen enthält, durchgeführt. Die wäßrige Emulsion enthält des weiteren in der wäßrigen Phase die entsprechenden Monomeren in gelöster Form (bis zur Sättigung), damit sich die emulgierten Monomertröpfchen nicht auflösen.

Die Herstellung der wäßrigen Primärdispersion (A) kann so ausgeführt werden, daß die vorstehend beschriebene bimodale Teilchengrößenverteilung resultiert. Verfahren zur Herstellung bimodaler Teilchengrößenverteilungen sind auf dem hier in Rede stehenden technologischen Gebiet üblich und bekannt. Vorzugsweise wird das in der deutschen Patentanmeldung DE-A-196 28 142, Seite 5, Zeilen 31 bis 49, beschriebene Saat-Verfahren angewandt.

Die Herstellung der Miniemulsionen weist keine methodischen Besonderheiten auf, sondern erfolgt nach den üblichen und bekannten Verfahren der Dispergierung oder Emulgierung in einem hohen Scherfeld. Beispiele geeigneter Verfahren werden in den Patentschriften DE 196 28 142 A1, Seite 5, Zeilen 1 bis 30, DE 196 28 143 A1, Seite 7, Zeilen 30 bis 58, oder EP 0 401 565 A1, Zeilen 27 bis 51, beschrieben.

Der Gehalt des erfindungsgemäßen Beschichtungsstoffs an der vorstehend beschriebenen wäßrigen Primärdispersion (A) kann sehr breit variieren richtet sich nach den Erfordernissen des Einzelfalls. Vorzugsweise liegt der Gehalt bei 50 bis 95, bevorzugt 55 bis 93, besonders bevorzugt 60 bis 90, ganz besonders bevorzugt 70 bis 90 und insbesondere 75 bis 90 Gew.-%, jeweils bezogen auf den erfindungsgemäßen Beschichtungsstoff.

Die sekundären wäßrigen Polyurethandispersionen (B) enthaltend mindestens ein Polyurethan.

Vorzugsweise werden die Polyurethane aus der Gruppe, bestehend aus gesättigten und ungesättigten, ionisch, nichtionisch sowie ionisch und nichtionisch stabilisierten, ungepfropften und mit olefinisch ungesättigten Monomeren gepfropften Polyurethanen, ausgewählt. Bevorzugt enthalten sie stabilisierende funktionelle Gruppen, die aus der Gruppe, bestehend aus
(1) funktionellen Gruppen, ausgewählt aus der Gruppe, bestehend aus Gruppen, die durch Neutralisationsmittel und/oder Quaternisierungsmittel in Kationen überführt werden können, und kationischen Gruppen,
   oder
(2) funktionellen Gruppen, ausgewählt aus der Gruppe, bestehend aus Gruppen, die durch Neutralisationsmittel in Anionen überführt werden können, und anionischen Gruppen,
   und
(3) nichtionischen hydrophilen Gruppen,
   ausgewählt werden.

Die Polyurethane, die hieraus hergestellten sekundären wäßrigen Dispersionen (B) und die Verfahren zu ihrer Herstellung sind üblich und bekannt und werden beispielsweise im Detail in der deutschen Patentanmeldung DE 199 14 896 A1, Spalte 1, Zeilen 29 bis 49, Spalte 1, Seite 67, bis Spalte 2, Zeile 9, Spalte 4, Zeile 23, bis Spalte 11, Zeile 5, und Spalte 19, Zeile 12, bis Spalte 20, Zeile 65, oder in der deutschen Patentanmeldung DE 44 37 535 A1, Seite 2, Zeile 27, bis Seite 6, Zeile 22, und Seite 7, Zeile 55, bis Seite 8, Zeile 23, beschrieben.

Der Gehalt der sekundären wäßrigen Polyurethandispersion (B) an den vorstehend beschriebenen Polyurethanen kann sehr breit variieren und richtet sich nach den Erfordernissen des Einzelfalls. Vorzugsweise liegt er bei 10 bis 55, bevorzugt 12 bis 50, besonders bevorzugt 14 bis 45, ganz besonders bevorzugt 16 bis 40 und insbesondere 18 bis 35 Gew.-%, jeweils bezogen auf die sekundäre wäßrige Polyurethandispersion (B).

Die sekundäre wäßrige Polyurethandispersion (B) enthält des weiteren mindestens ein Lichtschutzmittel, ausgewählt aus der Gruppe der regenerierbaren Radikalfänger, insbesondere der sterisch gehinderte Amine (HALS), die gemäß dem Denisov-Cyclus Peroxidradikale abfangen (vgl. Römpp Lexikon Lacke und Druckfarben, Georg Thieme Verlag, Stuttgart, New York, 1998, Seite 128, »Denisov-Cyclus«).

Beispiele geeigneter regenerierbarer Radikalfänger werden beispielsweise in der europäischen Patentanmeldung EP 0 453 396 A1, Seite 8, Zeile 57, bis Seite 22, Zeile 15, dem europäischen Patent EP 0576 943 B1, Seite 3, Zeile 3, bis Seite 5, Seite 19, oder der Firmenschrift »Tinuvin 292« der Firma Ciba-Geigy, 1987, im Detail beschrieben.

Der Gehalt der sekundären wäßrigen Polyurethandispersion (B) an den regenerierbaren Radikalfängern kann sehr breit variieren und richtet sich nach den Erfordernissen des Einzelfalls, insbesondere nach der für die Stabilisierung der erfindungsgemäßen Beschichtungsstoffe und der hieraus hergestellten erfindungsgemäßen Beschichtungen notwendigen Menge. Vorzugsweise liegt der Gehalt bei 0,1 bis 10, bevorzugt 0,5 bis 9,5, besonders bevorzugt 1 bis 9, ganz besonders bevorzugt 1,5 bis 8,5 insbesondere 1,5 bis 8 Gew.-%, jeweils bezogen auf die sekundäre wäßrige Polyurethandispersion (B).

Methodisch gesehen weist die Herstellung der sekundären wäßrigen Polyurethandispersionen (B) keine Besonderheiten auf, sondern es werden die regenerierbaren Radikalfänger vorzugsweise gemeinsam mit den Polyurethanen in Wasser dispergiert, wobei die üblichen und bekannten Vorrichtungen wie Rührkessel, Ultraturrax oder Dissolver angewandt werden können.

Der Gehalt der erfindungsgemäßen Beschichtungsstoffe an den vorstehend beschriebenen sekundären wäßrigen Polyurethandispersionen (B) kann sehr breit variieren und richtet sich nach den Erfordernissen des Einzelfalls. Vorzugsweise liegt der Gehalt bei 5 bis 50, bevorzugt 7 bis 45, besonders bevorzugt 10 bis 40, ganz besonders bevorzugt 10 bis 30 und insbesondere 10 bis 25 Gew.-%, jeweils bezogen auf den erfindungsgemäßen Beschichtungsstoff.

Bei dem erfindungsgemäßen Verfahren werden die vorstehend beschriebenen Dispersionen (A) und (B) miteinander vermischt, wodurch die erfindungsgemäßen Beschichtungsstoffe resultieren. Vorzugsweise werden die Dispersionen (A) und (B) in einem Gewichtsverhältnis vermischt, daß sich die vorstehend beschriebenen Gehalte an (A) und (B) in den erfindungsgemäßen Beschichtungsstoffen einstellen. Methodisch bietet das Vermischen der Dispersionen (A) und (B) keine Besonderheiten, sondern es können die vorstehend beschriebenen Verfahren und Vorrichtungen angewandt werden.

Außer den vorstehend beschriebenen Bestandteilen können die erfindungsgemäßen Beschichtungsstoffe noch mindestens einen lacktypischen Zusatzstoff enthalten.

Die lacktypischen Zusatzstoffe können den erfindungsgemäßen Beschichtungsstoffen nach, während oder vor ihrer Herstellung zugesetzt werden. Es ist auch möglich, diese Maßnahmen miteinander zu kombinieren. Werden sie vor ihrer Herstellung zugesetzt, können sie zu den Dispersionen (A) und (B) oder der Dispersion (A) oder (B) hinzugegeben werden.

Vorzugsweise werden die lacktypischen Zusatzstoffe aus der Gruppe, bestehend aus farb- und/oder effektgebenden, magnetisch abschirmenden, elektrisch leitfähigen und fluoreszierenden Pigmenten, Metallpulvern, organischen und anorganischen, transparenten und opaken Füllstoffen, Nanopartikeln, organischen Farbstoffen, Vernetzungsmitteln UV-Absorbern, nicht regenerierbaren Radikalfängern, Entlüftungsmitteln, Slipadditiven, Polymerisationsinhibitoren, Katalysatoren für die Vernetzung, thermolabilen radikalischen Initiatoren, Photoinitiatoren, thermisch härtbaren Reaktivverdünnern, mit aktinischer Strahlung härtbaren Reaktivverdünnern, Haftvermittlern, Verlaufmitteln, filmbildenden Hilfsmitteln, Entschäumern, Emulgatoren, Netz- und Dipergiermitteln, rheologiesteuernden Additiven (Verdicker), Flammschutzmitteln, Korrosionsinhibitoren, Wachsen und Mattierungsmitteln, ausgewählt. Diese lacktypischen Zusatzstoffe werden beispielsweise in der deutschen Patentanmeldung DE 199 14 896 A1, Spalte 14, Zeile 6, bis Spalte 15, Zeile 9, beschrieben. Geeignete Vernetzungsmittel sind die vorstehend beschriebenen, inklusive der freien Polyisocyanate, die eingesetzt werden, wenn der erfindungsgemäße Beschichtungsstoff als Zweikomponentensystem formuliert wird.

Die farb- und/oder effektgebenden, magentisch abschirmenden, elektrisch leitfähigen und fluoreszierenden Pigmente, Metallpulver sowie organischen und anorganischen, opaken Füllstoffe werden verwendet, wenn die erfindungsgemäßen Beschichtungsstoffe als Füller, Unidecklacke oder Wasserbasislacke, insbesondere aber als Wasserbasislacke im Rahmen des sogenannten Naß-in-naß-Verfahrens (vgl. beispielsweise das europäische Patent EP 0 089 497 B 1) zur Herstellung farb- und/oder effektgebender Mehrschichtlackierungen eingesetzt werden. Die anderen lacktypischen Zusatzstoffe können sowohl in den erfindungsgemäßen pigmentierten als auch in den erfindungsgemäßen nicht pigmentierten Beschichtungsstoffen (Klarlacken) eingesetzt werden.

Sollen die erfindungsgemäßen Beschichtungsstoffe auch mit aktinischer Strahlung härtbar sein (Dual Cure), enthalten sie Zusatzstoffe, die mit aktinischer Strahlung härtbar sind. Bei der aktinischen Strahlung kann es sich um elektromagnetische Strahlung wie nahes Infrarot (NIR), sichtbares Licht, UV-Licht oder Röntgenstrahlung oder um Korpuskularstrahlung wie Elektronenstrahlung handeln. Beispiele geeigneter mit aktinischer Strahlung härtbarer Zusatzstoffe sind aus dem deutschen Patent DE 197 09 467 C1 bekannt.

Die erfindungsgemäßen Beschichtungsstoffe sind lagerstabil und neigen auch nicht nach großen Temperaturenschwankungen zum Entmischen von Bestandteilen. Sie können daher problemlos über weite Strecken transportiert werden, ohne daß ihr vorteilhaftes anwendungstechnisches Eigenschaftprofil in Mitleidenschaft gezogen wird.

Methodisch weist die Applikation der erfindungsgemäßen Beschichtungsstoffe keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen.

Als Substrate kommen alle zu lackierenden Oberflächen, die durch eine Härtung der hierauf befindlichen Lackschichten unter Anwendung von Hitze nicht geschädigt werden, in Betracht. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips- und Zementplatten oder Dachziegel, sowie Verbunden dieser Materialien.

Demnach ist der erfindungsgemäße Beschichtungsstoff auch für Anwendungen außerhalb der Automobillackierung hervorragend geeignet. Hierbei kommt er insbesondere für die Lackierung von Bauwerken im Innen- und Außenbereich, die Lackierung von Türen, Fenstern und Möbeln, die industrielle Lackierung, inklusive Coil Coating, Container Coating und die Imprägnierung und/oder Beschichtung elektrotechnischer Bauteile, sowie die Lackierung von weißer Ware, inclusive Haushaltsgeräte, Heizkessel und Radiatoren, in Betracht. Im Rahmen der industriellen Lackierungen eignet er sich für die Lackierung praktisch aller Teile und Gegenstände für den privaten oder industriellen Gebrauch wie Haushaltsgeräte, Kleinteile aus Metall, wie Schrauben und Muttern, Radkappen, Felgen, Emballagen, oder elektrotechnische Bauteile, wie Motorwicklungen oder Transformatorwicklungen.

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische Elektrotauchlacke, in Betracht. Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Überraschenderweise eignen sich die erfindungsgemäßen Beschichtungsstoffe auch als Klebstoffe und Dichtungsmassen für die Herstellung von Klebschichten und Dichtungen, insbesondere für die vorstehend genannten Substrate.

Auch die Härtung der applizierten erfindungsgemäßen Beschichtungsstoffe weist keine methodischen Besonderheiten auf, sondern erfolgt nach den üblichen und bekannten thermischen Methoden wie Erhitzen in einem Umluftofen oder Bestrahlen mit IR-Lampen, die im Falle von Dual Cure noch durch die Bestrahlung mit aktinischer Strahlung ergänzt werden kann. Hierbei können Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen angewandt werden.

Die resultierenden erfindungsgemäßen Beschichtungen, insbesondere die erfindungsgemäßen ein- oder mehrschichtigen farb- und/oder effektgebenden Lackierungen und Klarlackierungen sind einfach herzustellen und weisen hervorragende optische Eigenschaften und eine sehr hohe Licht-, Chemikalien- und Witterungsbeständigkeit auf. Insbesondere sind sie frei von Trübungen und Inhomogenitäten. Demgemäß sind auch die erfindungsgemäßen Substrate, die mindestens eine erfindungsgemäße Beschichtung enthalten, von einem besonders hohen Gebrauchswert und einer besonders langen Gebrauchsdauer, was sie für Hersteller und Anwender wirtschaftlich und technisch besonders attraktiv macht.

### Beispiele und Vergleichsversuche

### Herstellbeispiel 1

### Die Herstellung eines Polyurethans

In einem Edelstahlreaktor, ausgerüstet mit Rührer und Rückflußkühler, wurden 43,837 Gewichtsteile eines hydroxylgruppenhaltigen Polyesters (hergestellt aus 42,472 Gewichtsteilen Isophthalsäure, 16,368 Neopentylglykol, 4,022 Gewichtsteilen Phthalsäureanhydrid, 36,439 Gewichtsteilen Hydroxypivalinsäureneopentylglykolester und 0,699 Gewichtsteilen Ethylbutylpropandiol), 18,189 Gewichtsteile Methylethylketon, 0,485 Gewichtsteile Ethylbutylpropandiol, 5,041 Gewichtsteile Dimethylolpropionsäure und 24,952 Gewichtsteile Desmodur® W (handelsübliches Polyisocyanat der Firma Bayer AG auf der Basis des Isocyanurats von Hexamethylendiisocyanat) vorgelegt und unter Rühren auf 80°C erhitzt. Bei Erreichen eines Gehalts an freien Isocyanatgruppen von 2,98 Gew.-%, bezogen auf den Festkörper der Reaktionsmischung, wurden 7,496 Gewichtsteile Trimethylolpropan zugegeben. Die resultierende Reaktionsmischung wurde solange auf 80°C erhitzt, bis keine freien Isocyanatgruppen mehr nachweisbar waren. Das so erhaltene Polyurethan wies einen Festkörpergehalt von 80,9 Gew.-% (eine Stunde/130°C) und eine Säurezahl von 28,4 mg KOH/g Festkörper auf.

### Herstellbeispiel 2

### Die Herstellung einer sekundären wäßrigen Polyurethandispersion (B)

In einem Edelstahlreaktor, ausgerüstet mit Rückflußkühler, Vakuumsdestillationsbrücke und Destillationsvorlage, wurden 19,464 Gewichtsteile des Polyurethans des Herstellbeispiels 1, 3,29 Gewichtsteile Tinuvin® 123 (handelsübliches sterisch gehindertes Amin (HALS) der Firma Ciba) und 27,511 Methylethylketon vorgelegt und unter Rühren auf 80°C erhitzt. Die erhaltene Lösung wurde mit 0,548 Gewichtsteilen Dimethylethanolamin, entsprechend einem Neutralisationsgrad von 70%, tropfenweise neutralisiert. Anschließend wurden 49,187 Gewichtsteile deionisiertes Wasser hinzugegeben. Der so erhaltenen sekundären wäßrig-organischen Polyurethandispersionen wurde das Methylethylketon durch Vakuumdestillation bei 80°C entzogen. Es resultierte eine sekundäre wäßrige Polyurethandispersion mit einem pH-Wert von 8,54, einem Festkörpergehalt von 30,8 Gew.-% und einer z-mittleren Teilchengröße von 194,95 nm, gemessen mit der Photonenkorrelationsspektroskopie (PCS Malvern Zetasizer 1000).

### Herstellbeispiel 3

### Die Herstellung einer wäßrigen Primärdispersion (A)

Eine Mischung, bestehend aus 6,6 Gewichtsteilen Methylmethacrylat, 7,9 Gewichtsteilen n-Butylacrylat, 3,3 Gewichtsteilen Styrol, 7,1 Gewichtsteilen Hydroxypropylmethacrylat, 0,5 Gewichtsteilen Diphenylethylen, 0,8 Gewichtsteilen 2,4-Diethyloctan-1,5-diol, 0,4 Gewichtsteilen Tinuvin® 400 (handelsüblicher UV-Absorber auf der Basis von Triazin der Firma Ciba, 85 %ig in Methoxy-2-propanol), 13,4 Gewichtsteilen Crelan® VPLS (mit 3,5-Dimethylpyrazol blockiertes aliphatisches Polyisocyanat auf der Basis von Isophorondiisocyanat) und 2,3 Gewichtsteilen Di(4-tert.-Butylcyclohexyl)peroxodicarbonat, wurde mit 56,6 Gewichtsteilen deionisiertem Wasser, das 1,07 Gewichtsteile Ammoniumnonylphenylethersulfat (30 %ig in Wasser, Abex® EP 110) enthielt, versetzt und während 40 Sekunden mit einem Ultraturrax bei 10.000 U/min homogenisiert. Die resultierende Präemulsion wurde durch zehnminütige Druckentspannungshomogenisierung mit Hilfe eines Düsenstrahldispergators der Firma Wagner bei 180 bar in eine stabilen Miniemulsion mit einer z-mittleren Teilchengröße, gemessen mit der Photonenkorrelationsspektroskopie (PCS Malvern Zetasizer 1000), von < 230 nm umgewandelt. Die Miniemulsion wurde in einen geeigneten Stahlreaktor mit Rührer und Rückflußkühler überführt und bei einer konstanten Polymerisationstemperatur von 70°C unter Rühren solange polymerisiert, bis der theoretische Festkörpergehalt von 40 Gew.-% erreicht war. Der Restmonomerengehalt war dann < 0,1 Gew.-%. Hierbei konnte anhand des Vergleichs der Öltemperatur (Heizmedium des Reaktors) mit der Temperatur der Reaktionsmischung keine Exothermie beobachtet werden.

### Beispiel 1

### Die Herstellung eines erfindungsgemäßen Klarlacks

81,63 Gewichtsteile der wäßrigen Primärdispersion (A) des Herstellbeispiels 3 wurden in einem Rührkessel vorgelegt. Zur Vorlage wurden nacheinander in der angegebenen Reihenfolge 16,33 Gewichtsteile der sekundären wäßrigen Polyurethandispersion (B) des Herstellbeispiels 2, 1,22 Gewichtsteile eines Verdickers (Collacral® VL, 30 %ige wäßrige Lösung eines Vinylpyrrolidoncopolymers) und 0,82 Gewichtsteile eines Netzmittels (Byk® 348, polyethermodifiziertes Polydimethylsiloxan) unter Rühren zugegeben. Der resultierende Klarlack war lagerstabil und zeigte auch nach mehrmonatiger Lagerung keine Entmischung.

### Vergleichsversuch V 1

### Die Herstellung eines nicht erfindungsgemäßen Klarlacks

Beispiel 1 wurde wiederholt, nur daß anstelle der sekundären wäßrigen Polyurethandispersion (B) des Herstellbeispiels 2 0,735 Gewichtsteile Tinuvin® 123 und anstelle von 81,63 Gewichtsteilen 97,225 Gewichtsteile der wäßrigen Primärdispersion des Herstellbeispiels 3 verwendet wurden. Der Klarlack zeigte nach mehrmonatiger Lagerung eine geringe Entmischung.

### Beispiel 2 und Vergleichsversuch V 2

### Die Herstellung einer erfindungsgemäßen (Beispiel 2) und einer nicht erfindungsgemäßen (Vergleichsversuch V 2) Mehrschichtlackierung

Für das Beispiel 2 wurde der erfindungsgemäße Klarlack des Beispiels 1 verwendet.

Für den Vergleichsversuch V 2 wurde der nicht erfindungsgemäße Klarlack des Vergleichsversuchs V 1 verwendet.

Auf mit einem handelsüblichen Elektrotauchlack kathodisch beschichteten Stahltafeln (Elektrotauchlackierung mit einer Schichtdicke von 18-22 µm) wurde mit einer Becherpistole zunächst ein handelsüblicher wässriger Füller auf Polyurethanbasis von BASF Coatings AG appliziert und eingebrannt. Es resultierte eine Füllerlackierung mit einer Schichtdicke von 35 bis 40 µm. Anschließend wurde auf den Füller in gleicher Weise ein handelsüblicher schwarzer Unibasislack der Firma BASF Coatings AG appliziert und während 10 min bei 80 °C vorgetrocknet. Nach dem Kühlen der Tafeln wurde eine Schicht des erfindungsgemäßen Klarlacks (Beispiel 1) und eine Schicht des nicht erfindungsgemäßen Klarlacks (Vergleichsversuch V1) mit pneumatischen Spritzpistolen aufgetragen. Die resultierende Klarlackschichten wurden während 10 min bei 50 °C vorgetrocknet und anschließend während 25 min bei 130 °C Objekttemperatur zusammen mit den Basislackschichten vernetzt. Es resultierten Basislackierungen einer Stärke von 12 bis 15 µm und Klarlackierungen einer Stärke von 40 bis 50 µm. Der schwarze Unibasislack wurde gewählt, weil man an den entsprechenden Prüftafeln die Bildung von Oberflächenstörungen und Filmstörungen am besten beobachten konnte.

Während die Klarlackierung der nicht erfindungsgemäßen Mehrschichtlackierung des Vergleichsversuchs V 2 einen vergleichsweise schlechten Verlauf und Trübungen und Filmstörungen aufwies, war die erfindungsgemäße Klarlackierung des Beispiels 2 glatt und ohne Trübungen und Filmstörungen.

Die erfindungsgemäße Mehrschichtlackierung wies einen hervorragenden optischen Gesamteindruck auf. Der nach DIN 67530 mit einem Reflektometer der Firma BYK reflektometrisch unter einem Winkel von 20° gemessene Glanz lag bei 84, der Haze bei 50 bis 70. Ihre Beständigkeit gegen UV-Strahlung und Tageslicht war signifikant besser als die der Mehrschichtlackierung des Vergleichsversuchs V 2.

## Patentansprüche

1. Von flüchtigen organischen Stoffen im wesentlichen oder völlig freier wäßriger Beschichtungsstoff, herstellbar, indem man
(A) mindestens eine wässrige Primärdispersion, enthaltend dispergierte und/oder emulgierte, feste und/oder flüssige Polymerpartikel und/oder dispergierte feste Kern-Schale-Partikel eines Teilchendurchmesser ≤ 500 nm, herstellbar durch radikalische Mikro- oder Miniemulsionspolymerisation mindestens eines olefinisch ungesättigten Monomeren in der Gegenwart mindestens eines hydrophoben Zusatzstoffs,
und
(B) mindestens eine sekundäre wäßrige Polyurethandispersion, enthaltend mindestens ein Polyurethan und mindestens ein Lichtschutzmittel, ausgewählt aus der Gruppe der regenerierbaren Radikalfänger,
miteinander vermischt.

2. Beschichtungsstoff nach Anspruch 1, **dadurch gekennzeichnet, daß** mindestens zwei unterschiedliche Monomere copolymerisiert werden.

3. Beschichtungsstoff nach Anspruch 2, **dadurch gekennzeichnet, daß** die Monomeren durch die kontrollierte radkalische Mikro- oder Miniemulsionspolymerisation copolymerisiert werden.

4. Beschichtungsstoff nach Anspruch 3, **dadurch gekennzeichnet, daß** eines der Monomeren aus der Gruppe, bestehend aus Monomeren der allgemeinen Formel I
**R¹R²C=CR³R⁴** (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen; ausgewählt werden.

5. Beschichtungsstoff nach Anspruch 4, **dadurch gekennzeichnet, daß** es sich bei den Arylresten R¹, R², R³ und/oder R⁴ der Monomeren I um Phenyl- oder Naphthylreste handelt.

6. Beschichtungsstoff nach Anspruch 5, **dadurch gekennzeichnet, daß** es sich um Phenylreste handelt.

7. Beschichtungsstoff nach einem der Ansprüche 2 bis 4, **dadurch gekennzeichnet, daß** die Substituenten in den Resten R¹, R², R³ und/oder R⁴ der Monomeren I aus der Gruppe, bestehend aus elektronenziehenden oder elektronenschiebenden Atomen oder organischen Resten, ausgewählt werden.

8. Beschichtungsstoff nach Anspruch 5, **dadurch gekennzeichnet, daß** die Substituenten aus der Gruppe, bestehend aus Halogenatomen, Nitril-, Nitro-, partiell oder vollständig halogenierten Alkyl-, Cycloalkyl-, Alkylcycloalkyl-, Cycloalkylalkyl-, Aryl-, Alkylaryl-, Cycloalkylaryl-Arylalkyl- und Arylcycloalkylreste; Aryloxy-, Alkyloxy- und Cycloalkyloxyresten; Arylthio-, Alkylthio- und Cycloalkylthioresten und primären, sekundären und/oder tertiären Amionogruppen, ausgewählt werden.

9. Beschichtungsstoff nach einem der Ansprüche 1 bis 8, **dadurch gekennzeichnet, daß** das Monomer oder das von den Monomeren I unterschiedliche Monomer aus der Gruppe, bestehend aus
(1) im wesentlichen säuregruppenfreien (Meth)acrylsäureester;
(2) Monomere, welche mindestens eine Hydroxylgruppe, Aminogruppe, Alkoxymethylaminogruppe oder Iminogruppe pro Molekül tragen und im wesentlichen säuregruppenfrei sind;
(3) Monomere, welche mindestens eine Säuregruppe, die in die entsprechende Säureaniongruppe überführbar ist, pro Molekül tragen;
(4) Vinylester von in alpha-Stellung verzweigten Monocarbonsäuren mit 5 bis 18 Kohlenstoffatome im Molekül;
(5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül;
(6) cyclische und/oder acyclische Olefine;
(7) (Meth)Acrylsäureamide;
(8) Epoxidgruppen enthaltende Monomere;
(9) vinylaromatische Kohlenwasserstoffe;
(10) Nitrile;
(11) Vinylverbindungen, insbesondere Vinyl- und/oder Vinylidendihalogenide, N-Vinylpyrrolidon, Vinylether und/oder Vinylester;
(12) Allylverbindungen, insbesondere Allylether und -ester;
(13) Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure; und
(14) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen;
ausgewählt wird oder werden, mit der Maßgabe, daß die Monomeren (3) nicht als die alleinigen Monomere verwendet werden

10. Beschichtungsstoff nach einem der Ansprüche 1 bis 9, **dadurch gekennzeichnet, daß** es sich bei den dispergierten Teilchen um Kern-Schale-Partikel mit Kernen aus organischen Feststoffen und mit Schalen aus Copolymerisaten, die mindestens ein Monomer (3) und mindestens ein hiervon verschiedenes Monomer einpolymerisiert enthalten, handelt.

11. Beschichtungsstoff nach einem der Ansprüche 1 bis 10, **dadurch gekennzeichnet, daß** die hydrophoben Zusatzstoffe aus der Gruppe, bestehend aus,
(1) mindestens einem hydrophoben Vernetzungsmittel, ausgewählt aus der Gruppe, bestehend aus mindestens einem Vernetzungsmittel für das aus den Monomeren resultierende (Co)Polymerisat der wäßrigen Primärdispersion (A) und mindestens einem Vernetzungsmittel für das Polyurethan der sekundären wäßrigen Polyurethandispersion (B);
(3) mindestens einem polyhydroxyfunktionalisierten cyclischen und acyclischen Alkan mit 9 bis 16 Kohlenstoffatomen im Molekül sowie
(3) mindestens einer hydrophoben Verbindung, ausgewählt aus der Gruppe, bestehend aus Estern von 3 bis 6 Kohlenstoffatomen aufweisenden alpha,beta-monoolefinisch ungesättigten Carbonsäuren mit Alkoholen mit 12 bis 30 Kohlenstoffatomen im Alkylrest; Estern von Vinyl- und/oder Allylalkohol mit 12 bis 30 Kohlenstoffatome im Molekül aufweisenden Alkanmonocarbon-, sulfon- und/oder phosphonsäuren; Amiden von 3 bis 6 Kohlenstoffatome aufweisenden alpha, beta-monoolefinisch ungesättigten Carbonsäuren mit Alkylaminen mit 12 bis 30 Kohlenstoffatomen im Alkylrest; Makromomeren auf der Basis olefinisch ungesättigter Verbindungen mit im statstischen Mittel mindestens einer, insbesondere endständigen, olefinisch ungesättigten Gruppe im Molekül; Polysiloxanmakromonomeren mit im statstischen Mittel mindestens einer, insbesondere endständigen, olefinisch ungesättigten Gruppe im Molekül; oligomere und/oder polymere Polymerisations-, Polykondensations- und/oder Polyadditionsprodukten; wasserunlöslichen Molekulargewichtsreglem, insbesondere Mercaptane; aliphatischen, cycloaliphatischen und/oder aromatischen halogenierten und/oder nicht halogenierten Kohlenwasserstoffen; Alkanolen und/oder Alkylaminen mit mindestens 12 Kohlenstoffatomen im Alkylrest; Organosilanen und/oder -siloxanen; pflanzlichen, tierischen, halbsynthetischen und/oder synthetischen Ölen; und/oder hydrophoben Farbstoffen;
ausgewählt werden.

12. Beschichtungsstoff nach Anspruch 11, **dadurch gekennzeichnet, daß** mindestens ein Zusatzstoff aus der Gruppe der hydrophoben Vernetzungsmittel und mindestens ein Zusatzstoff aus der Gruppe der polyhydroxyfunktionalisierten cyclischen und acyclischen Alkane mit 9 bis 16 Kohlenstoffatomen im Molekül verwendet wird.

13. Beschichtungsstoff nach Anspruch 11 oder 12, **dadurch gekennzeichnet, daß** die hydrophoben Vernetzungsmittel aus der Gruppe, bestehend aus, blockierten Polyisocyanaten, Tris(alkoxycarbonylamino)triazinen und vollständig veretherten Aminoplastharzen, ausgewählt werden.

14. Beschichtungsstoff nach einem der Ansprüche 1 bis 13, **dadurch gekennzeichnet, daß** die Polyurethane (B) aus der Gruppe, bestehend aus gesättigten und ungesättigten, ionisch, nichtionisch sowie ionisch und nichtionisch stabilisierten, ungepfropften und mit olefinisch ungesättigten Monomeren gepfropften Polyurethanen, ausgewählt werden.

15. Beschichtungsstoff nach Anspruch 14, **dadurch gekennzeichnet, daß** die Polyurethane (B), funktionelle Gruppen enthalten, die aus der Gruppe, bestehend aus
(1) funktionellen Gruppen, ausgewählt aus der Gruppe, bestehend aus Gruppen, die durch Neutralisationsmittel und/oder Quaternisierungsmittel in Kationen überführt werden können, und kationischen Gruppen,
oder
(2) funktionellen Gruppen, ausgewählt aus der Gruppe, bestehend aus Gruppen, die durch Neutralisationsmittel in Anionen überführt werden können, und anionischen Gruppen,
und
(3) nichtionischen hydrophilen Gruppen,
ausgewählt werden.

16. Beschichtungsstoff nach einem der Ansprüche 1 bis 15, **dadurch gekennzeichnet, daß** als regenerierbare Radikalfänger sterisch gehinderte Amine (HALS) verwendet werden.

17. Beschichtungsstoff nach einem der Ansprüche 1 bis 16, **dadurch gekennzeichnet, daß** er mindestens einen lacktypischen Zusatzstoff, ausgewählt aus der Gruppe, bestehend aus farb- und/oder effektgebenden, magnetisch abschirmenden, elektrisch leitfähigen und fluoreszierenden Pigmenten, Metallpulvern, organischen und anorganischen, transparenten und opaken Füllstoffen, Nanopartikeln, Vernetzungsmitteln, UV-Absorbern, nicht regenerierbaren Radikalfängern, Entlüftungsmitteln, Slipadditiven, Polymerisationsinhibitoren, Katalysatoren für die Vernetzung, thermolabilen radikalischen Initiatoren, Photoinitiatoren, thermisch härtbaren Reaktivverdünnern, mit aktinischer Strahlung härtbaren Reaktivverdünnern, Haftvermittlern, Verlaufmitteln, filmbildenden Hilfsmitteln, Entschäumern, Emulgatoren, Netz- und Dipergiermitteln, rheologiesteuernden Additiven (Verdicker), Flammschutzmitteln, Korrosionsinhibitoren, Wachsen und Mattierungsmitteln, enthält.

18. Verfahren zur Herstellung eines von flüchtigen organischen Stoffen im wesentlichen oder völlig freien wäßrigen Beschichtungsstoffs gemäß einem der Ansprüche 1 bis 17, **dadurch gekennzeichnet, daß** man
(I) mindestens eine wässrige Primärdispersion (A), enthaltend dispergierte und/oder emulgierte, feste und/oder flüssige Polymerpartikel und/oder dispergierte feste Kem-Schale-Partikel eines Teilchendurchmesser ≤ 500 nm, durch radikalische Mikro- oder Miniemulsionspolymerisation mindestens eines olefinisch ungesättigten Monomeren in der Gegenwart mindestens eines hydrophoben Zusatzstoffs herstellt,
(II) mindestens eine sekundäre wäßrige Polyurethandispersion (B), enthaltend mindestens ein Polyurethan und mindestens ein Lichtschutzmittel, ausgewählt aus der Gruppe der regenerierbaren Radikalfänger, herstellt und
(III) die Dispersionen (A) und (B) miteinander vermischt.

19. Verfahren nach Anspruch 18, **dadurch gekennzeichnet, daß** man zu den Dispersionen (A) und/oder (B) vor, während und/oder nach ihrer Vermischung mindestens einen lacktypischen Zusatzstoff hinzugibt.

20. Verwendung des Beschichtungsstoffs gemäß einem der Ansprüche 1 bis 16 und/oder des gemäß Anspruch 18 oder 19 hergestellten Beschichtungsstoffs für die Automobilerstlackierung, die Lackierung von Bauwerken im Innen- und Außenbereich, die Lackierung von Türen, Fenstern und Möbeln, die industrielle Lackierung, inklusive Coil Coating, Container Coating und die Imprägnierung und/oder Beschichtung elektrotechnischer Bauteile, sowie die Lackierung von weißer Ware, inclusive Haushaltsgeräte, Heizkessel und Radiatoren.

21. Verwendung nach Anspruch 20, **dadurch gekennzeichnet, daß** der Beschichtungsstoff als Klarlack oder als Wasserbasislack verwendet wird.

22. Verwendung nach Anspruch 20 oder 21, **dadurch gekennzeichnet, daß** der Beschichtungsstoff der Herstellung farb- und/oder effektgebender Mehrschichtlackierungen dient.

23. Verwendung des Beschichtungsstoffs gemäß einem der Ansprüche 1 bis 16 und/oder des gemäß Anspruch 18 oder 19 hergestellten Beschichtungsstoffs als Klebstoff oder Dichtungsmasse.

## Claims

1. Aqueous coating material, substantially or completely free from volatile organic compounds and preparable by mixing with one another
(A) at least one aqueous primary dispersion comprising dispersed and/or emulsified, solid and/or liquid polymer particles and/or dispersed solid core/shell particles with a diameter ≤ 500 nm, preparable by free-radical microemulsion or miniemulsion polymerization of at least one olefinically unsaturated monomer in the presence of at least one hydrophobic additive,
and
(B) at least one secondary aqueous polyurethane dispersion comprising at least one polyurethane and at least one light stabilizer selected from the group of the regenerable free-radical scavengers.

2. Coating material according to Claim 1, **characterized in that** at least two different monomers are copolymerized.

3. Coating material according to Claim 2, **characterized in that** the monomers are copolymerized by controlled free-radical microemulsion or miniemulsion polymerization.

4. Coating material according to Claim 3, **characterized in that** one of the monomers is selected from the group consisting of monomers of the general formula I
**R¹R²C=CR³R⁴** (I)
in which the radicals R¹, R², R³ and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals.

5. Coating material according to Claim 4, **characterized in that** the aryl radicals R¹, R², R³ and/or R⁴ of the monomers I are phenyl or naphthyl radicals.

6. Coating material according to Claim 5, **characterized in that** the radicals are phenyl radicals.

7. Coating material according to any of Claims 2 to 4, **characterized in that** the substituents in the radicals R¹, R², R³ and/or R⁴ of the monomers I are selected from the group consisting of electron-withdrawing or electron-donating atoms or organic radicals.

8. Coating material according to Claim 5, **characterized in that** the substituents are selected from the group consisting of halogen atoms, nitrile, nitro, partially or fully halogenated alkyl, cycloalkyl, alkylcycloalkyl, cycloalkylalkyl, aryl, alkylaryl, cycloalkylaryl, arylalkyl, and arylcycloalkyl radicals; aryloxy, alkyloxy, and cycloalkyloxy radicals; arylthio, alkylthio, and cycloalkylthio radicals; and primary, secondary and/or tertiary amino groups.

9. Coating material according to any of Claims 1 to 8, **characterized in that** the monomer, or the monomer other than the monomers I, is selected from the group consisting of
(1) substantially acid-group-free (meth)acrylic esters;
(2) monomers which carry per molecule at least one hydroxyl group, amino group, alkoxymethylamino group or imino group and are substantially free from acid groups;
(3) monomers which carry per molecule at least one acid group which can be converted into the corresponding acid anion group;
(4) vinyl esters of alpha-branched monocarboxylic acids having 5 to 18 carbon atoms in the molecule;
(5) reaction products of acrylic acid and/or methacrylic acid with the glycidyl ester of an alpha-branched monocarboxylic acid having 5 to 18 carbon atoms per molecule;
(6) cyclic and/or acyclic olefins;
(7) (meth)acrylamides;
(8) monomers containing epoxide groups;
(9) vinylaromatic hydrocarbons;
(10) nitriles;
(11) vinyl compounds, especially vinyl halides and/or vinylidene dihalides, N-vinylpyrrolidone, vinyl ethers and/or vinyl esters;
(12) allyl compounds, especially allyl ethers and allyl esters;
(13) acryloxysilane-containing vinyl monomers, preparable by reacting hydroxy-functional silanes with epichlorohydrin and then reacting the reaction product with (meth)acrylic acid and/or with hydroxyalkyl esters of (meth)-acrylic acid; and
(14) polysiloxane macromonomers having a number-average molecular weight Mn of from 1 000 to 40 000 and having on average from 0.5 to 2.5 ethylenically unsaturated double bonds per molecule;
with the proviso that the monomers (3) are not used as the sole monomers.

10. Coating material according to any of Claims 1 to 9, **characterized in that** the dispersed particles are core/shell particles with cores of organic solids and with shells of copolymers containing in copolymerized form at least one monomer (3) and at least one monomer other than this monomer.

11. Coating material according to any of Claims 1 to 10, **characterized in that** the hydrophobic additives are selected from the group consisting of
(1) at least one hydrophobic crosslinking agent selected from the group consisting of at least one crosslinking agent for the (co)polymer of the aqueous primary dispersion (A), said (co)polymer resulting from the monomers, and at least one crosslinking agent for the polyurethane of the secondary aqueous polyurethane dispersion (B);
(2) at least one polyhydroxy-functionalized cyclic or acyclic alkane having 9 to 16 carbon atoms in the molecule, and
(3) at least one hydrophobic compound selected from the group consisting of esters of alpha,beta-monoolefinically unsaturated carboxylic acids having 3 to 6 carbon atoms with alcohols having 12 to 30 carbon atoms in the alkyl radical; esters of vinyl alcohol and/or allyl alcohol with alkanemonocarboxylic, alkanemonosulfonic and/or alkanemonophosphonic acids having 12 to 30 carbon atoms in the molecule; amides of alpha,beta-monoolefinically unsaturated carboxylic acids having 3 to 6 carbon atoms with alkylamines having 12 to 30 carbon atoms in the alkyl radical; macromonomers based on olefinically unsaturated compounds containing on average at least one, especially terminal, olefinically unsaturated group in the molecule; polysiloxane macromonomers containing on average at least one, especially terminal, olefinically unsaturated group in the molecule; oligomeric and/or polymeric products of addition polymerization, polycondensation and/or polyaddition; water-insoluble molecular weight regulators, especially mercaptans; aliphatic, cycloaliphatic and/or aromatic halogenated and/or nonhalogenated hydrocarbons; alkanols and/or alkylamines having at least 12 carbon atoms in the alkyl radical; organosilanes and/or organosiloxanes; vegetable, animal, semisynthetic and/or synthetic oils; and/or hydrophobic dyes.

12. Coating material according to Claim 11, **characterized in that** at least one additive is used from the group of the hydrophobic crosslinking agents and at least one additive from the group of the polyhydroxy-functionalized cyclic and acyclic alkanes having 9 to 16 carbon atoms in the molecule.

13. Coating material according to Claim 11 or 12, **characterized in that** the hydrophobic crosslinking agents are selected from the group consisting of blocked polyisocyanates, tris(alkoxycarbonylamino)-triazines, and fully etherified amino resins.

14. Coating material according to any of Claims 1 to 13, **characterized in that** the polyurethanes (B) are selected from the group consisting of saturated or unsaturated, ionically, nonionically, and also ionically and nonionically stabilized polyurethanes, both ungrafted and grafted with olefinically unsaturated monomers.

15. Coating material according to Claim 14, **characterized in that** the polyurethanes (B) contain functional groups selected from the group consisting of
(1) functional groups selected from the group consisting of groups which may be converted into cations by neutralizing agents and/or quaternizing agents, and cationic groups,
or
(2) functional groups selected from the group consisting of groups which may be converted into anions by neutralizing agents, and anionic groups,
and
(3) nonionic hydrophilic groups.

16. Coating material according to any of Claims 1 to 15, **characterized in that** sterically hindered amines (HALS) are used as regenerable free-radical scavengers.

17. Coating material according to any of Claims 1 to 16, **characterized in that** it comprises at least one typical coatings additive selected from the group consisting of color and/or effect pigments, magnetically shielding pigments, electrically conductive pigments, and fluorescent pigments, metal powders, organic and inorganic, transparent and opaque fillers, nanoparticles, crosslinking agents, UV absorbers, nonregenerable free-radical scavengers, devolatilizers, slip additives, polymerization inhibitors, crosslinking catalysts, thermolabile free-radical initiators, photoinitiators, thermally curable reactive diluents, reactive diluents curable with actinic radiation, adhesion promoters, leveling agents, film-forming auxiliaries, defoamers, emulsifiers, wetting agents, dispersants, rheology control additives (thickeners), flame retardants, corrosion inhibitors, waxes, and flatting agents.

18. Process for preparing an aqueous coating material substantially or completely free from volatile organic compounds, according to any of Claims 1 to 17, **characterized in that** it comprises
(I) preparing at least one aqueous primary dispersion (A) comprising dispersed and/or emulsified, solid and/or liquid polymer particles and/or dispersed solid core/shell particles with a diameter ≤ 500 nm by free-radical microemulsion or miniemulsion polymerization of at least one olefinically unsaturated monomer in the presence of at least one hydrophobic additive,
(II) preparing at least one secondary aqueous polyurethane dispersion (B) comprising at least one polyurethane and at least one light stabilizer selected from the group of the regenerable free-radical scavengers, and
(III) mixing dispersions (A) and (B) with one another.

19. Process according to Claim 18, **characterized in that** a typical coatings additive is added to the dispersions (A) and/or (B) before, during and/or after their mixing.

20. Use of the coating material according to any of Claims 1 to 16 and/or of the coating material prepared according to Claim 18 or 19 for automotive OEM finishing, the painting of buildings inside and outside, the coating of doors, windows, and furniture, industrial coating, including coil coating, container coating, and the impregnation and/or coating of electrical components, and also the coating of white goods, including domestic appliances, boilers, and radiators.

21. Use according to Claim 20, **characterized in that** the coating material is used as a clearcoat material or as an aqueous basecoat material.

22. Use according to Claim 20 or 21, **characterized in that** the coating material is used to produce multicoat color and/or effect coating systems.

23. Use of the coating material according to any of Claims 1 to 16 and/or of the coating material prepared according to Claim 18 or 19 as an adhesive or sealing compound.

## Revendications

1. Substance de revêtement aqueuse essentiellement ou complètement exempte de substance organiques volatiles pouvant être préparée en mélangeant l'une avec l'autre :
(A) au moins une dispersion aqueuse primaire, contenant des particules polymères solides et/ou liquides, dispersées et/ou émulsionnées, et/ou des particules noyau-enveloppe solides dispersées d'un diamètre de particule ≤ 500 nm, pouvant être préparée par polymérisation par voie radicalaire en microémulsion ou en miniémulsion d'au moins un monomère oléfiniquement insaturé en présence d'au moins un additif hydrophobe,
et
(B) au moins une dispersion polyuréthanne aqueuse secondaire, contenant au moins un polyuréthanne et au moins un produit de protection contre la lumière, sélectionné parmi le groupe des amorceurs de radicaux régénérables.

2. Substance de revêtement selon la revendication 1, **caractérisée en ce qu'**au moins deux monomères différents sont copolymérisés.

3. Substance de revêtement selon la revendication 2,
**caractérisée en ce que** les monomères sont copolymérisés grâce à la polymérisation par voie radicalaire contrôlée en microémulsion ou en miniémulsion.

4. Substance de revêtement selon la revendication 3, **caractérisée en ce qu'**un des monomères est sélectionné parmi le groupe constitué de monomères de formule générale I
**R¹R²C=CR³R⁴** (I),
dans laquelle les radicaux R¹ R² R³ et R⁴ représentent respectivement indépendamment l'un de l'autre des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle substitués ou non substitués, sous réserve qu'au moins deux des variables R¹, R², R³ et R⁴ représentent des radicaux aryle, arylalkyle ou arylcycloalkyle substitués ou non substitués, en particulier des radicaux aryle substitués ou non substitués.

5. Substance de revêtement selon la revendication 4, **caractérisée en ce qu'**il s'agit, en ce qui concerne les radicaux aryle R¹, R², R³ et/ou R⁴ des monomères I, de radicaux phényle ou naphtyle.

6. Substance de revêtement selon la revendication 5, **caractérisée en ce qu'**il s'agit de radicaux phényle.

7. Substance de revêtement selon l'une quelconque des revendications 2 à 4, **caractérisée en ce que** les substituants dans les radicaux R¹, R² R³ et/ou R⁴ des monomères I sont sélectionnés parmi le groupe constitué de radicaux organiques ou d'atomes qui attirent les électrons ou qui repoussent les électrons.

8. Substance de revêtement selon la revendication 5, **caractérisée en ce que** les substituants sont sélectionnés parmi le groupe constitué d'atomes d'halogène, de radicaux nitrile, nitro, alkyle, cycloalkyle, alkylcycloalkyle, cycloalkylalkyle, aryle, alkylaryle, cycloalkylaryle, arylalkyle et arylcycloalkyle partiellement ou complètement halogénés ; de radicaux aryloxy, alkyloxy et cycloalkyloxy ; de radicaux arylthio, alkylthio et cycloalkylthio et des groupes amino primaires, secondaires et/ou tertiaires.

9. Substance de revêtement selon l'une quelconque des revendications 1 à 8, **caractérisée en ce que** le monomère ou le monomère différent des monomères I est sélectionné parmi le groupe constitué des :
(1) esters d'acide (méth)acrylique essentiellement exempt de groupe acide ;
(2) monomères, portant au moins un groupe hydroxyle, un groupe amino, un groupe alcoxyméthylamino ou un groupe imino par molécule et étant essentiellement exempts de groupe acide ;
(3) monomères portant au moins un groupe acide par molécule, qui peut être transformé en le groupe anionique acide correspondant ;
(4) esters vinyliques d'acide monocarboxylique ramifié en position alpha ayant 5 à 18 atomes de carbone par molécule ;
(5) produits de réaction d'acide acrylique et/ou d'acide méthacrylique avec l'ester glycidylique d'un acide monocarboxylique ramifié en position alpha ayant 5 à 18 atomes de C par molécule ;
(6) oléfines cycliques et/ou acycliques ;
(7) amides d'acide (méth)acrylique ;
(8) monomères contenant des groupes époxydes ;
(9) hydrocarbures vinylaromatiques ;
(10) nitriles ;
(11) composés vinyliques, en particulier dihalogénures de vinyle et/ou de vinylidène, N-vinylpyrrolidone, éthers vinyliques et/ou esters vinyliques ;
(12) composés allyliques, en particulier éthers allyliques et esters allyliques ;
(13) monomères vinyliques contenant de l'acryloxysilane, pouvant être préparés par réaction de silanes hydroxyfonctionnelles avec de l'épichlorhydrine et réaction consécutive du produit de réaction avec de l'acide méthacrylique et/ou des esters hydroxyalkyliques de l'acide méth(acrylique) ; et de
(14) macromonomères de polysiloxane, présentant un poids moléculaire moyen numérique Mn de 1000 à 40 000 et en moyenne 0,5 à 2,5 liaisons doubles éthyléniquement insaturées par molécule ;
sous réserve que les monomères (3) ne soient pas utilisés en tant que seuls monomères.

10. Substance de revêtement selon l'une quelconque des revendications 1 à 9, **caractérisée en ce qu'**il agit, en ce qui concerne les particules dispersées, de particules noyau-enveloppe avec des noyaux en matières solides organiques et avec des enveloppes en copolymère, contenant à l'état polymérisé au moins un monomère (3) et au moins un monomère différent de celui-ci.

11. Substance de revêtement selon l'une quelconque des revendications 1 à 10, **caractérisée en ce que** les additifs hydrophobes sont sélectionnés parmi le groupe constitué de :
(1) au moins un agent de réticulation hydrophobe, sélectionné parmi le groupe constitué d'au moins un agent de réticulation pour le (co)polymère, résultant des monomères, de la dispersion aqueuse primaire (A) et d'au moins un agent de réticulation pour le polyuréthanne de la dispersion polyuréthanne aqueuse secondaire (B) ;
(2) au moins un alcane cyclique et acyclique polyhydroxyfonctionnalisé ayant 9 à 16 atomes de carbone par molécule, ainsi que
(3) au moins un composé hydrophobe, sélectionné parmi le groupe constitué d'esters d'acides carboxyliques alpha,bêta-monooléfiniquement insaturés présentant 3 à 6 atomes de carbone avec des alcools ayant 12 à 30 atomes de carbone par radical alkyle ; d'esters d'alcool vinylique et/ou d'alcool allylique avec des acides alcanemonocarboxyliques, sulfoniques et/ou phosphoniques présentant 12 à 30 atomes de carbone par molécule ; des amides d'acides carboxyliques alpha,bêta-monooléfiniquement insaturés présentant 3 à 6 atomes de carbone avec des alkylamines ayant 12 à 30 atomes de carbone par radical alkyle ; des macromonomères sur la base de composés oléfiniquement insaturés ayant en moyenne statistique au moins un groupe oléfiniquement insaturé, en particulier terminal, par molécule ; des macromonomères de polysiloxane ayant en moyenne statistique au moins un groupe oléfiniquement insaturé, en particulier terminal, par molécule ; des produits de polymérisation, de polycondensation et/ou de polyaddition oligomères et/ou polymères ; des régulateurs de poids moléculaire insolubles dans l'eau, en particulier des mercaptans, des hydrocarbures aliphatiques, cycloaliphatiques et/ou aromatiques halogénés et/ou non halogénés ; des alcanols et/ou des alkylamines ayant au moins 12 atomes de carbone par radical alkyle ; des organosilanes et/ou des organosiloxanes ; des huiles végétales, animales, semi-synthétiques et/ou synthétiques ; et/ou des colorants hydrophobes.

12. Substance de revêtement selon la revendication 11, **caractérisée en ce qu'**au moins un additif issu du groupe des agents de réticulation hydrophobes et au moins un additif issu du groupe des alcanes cycliques et acycliques polyhydroxyfonctionnalisés ayant 9 à 16 atomes de carbone par molécule sont utilisés.

13. Substance de revêtement selon la revendication 11
ou 12, **caractérisée en ce que** les agents de réticulation hydrophobes sont sélectionnés parmi le groupe constitué de polyisocyanates bloqués, de tris(alcoxycarbonylamino)triazines et de résines aminoplastiques complètement éthérifiées.

14. Substance de revêtement selon l'une quelconque des revendications 1 à 13, **caractérisée en ce que** les polyuréthannes (B) sont sélectionnés parmi le groupe constitué de polyuréthannes saturés et insaturés, ioniquement, non ioniquement ainsi que ioniquement et non ioniquement stabilisés, non greffés et greffés avec des monomères oléfiniquement insaturés.

15. Substance de revêtement selon la revendication 14, **caractérisée en ce que** les polyuréthannes (B) contiennent des groupes fonctionnels qui sont sélectionnés parmi le groupe constitué de :
(1) groupes fonctionnels, sélectionnés parmi le groupe constitué de groupes qui peuvent être transformés en cations grâce à un agent de neutralisation et/ou un agent de quaternation, et de groupes cationiques,
ou de
(2) groupes fonctionnels sélectionnés parmi le groupe constitué des groupes qui peuvent être transformés en anions grâce à un agent de neutralisation, et de groupes anioniques,
et de
(3) groupes hydrophiles non ioniques.

16. Substance de revêtement selon l'une quelconque des revendications 1 à 15, **caractérisée en ce que** des amines stériquement empêchées (HALS) sont utilisées en tant qu'amorceur de radical régénérable.

17. Substance de revêtement selon l'une quelconque des revendications 1 à 16, **caractérisée en ce qu'**il contient au moins un additif typique de la peinture, sélectionné parmi le groupe constitué des pigments colorants et/ou à effet, assurant un blindage magnétique, électriquement conducteurs et fluorescents, des poudres métalliques, des matières de remplissage organiques et minérales, transparentes et opaques, des nanoparticules, des agents de réticulation, des absorbeurs de rayons UV, des amorceurs de radicaux non régénérables, des agents de dégazage, des additifs de glisse, des inhibiteurs de polymérisation, des catalyseurs de la réticulation, des initiateurs radicalaires thermolabiles, des photoinitiateurs, des diluants réactifs pouvant durcir thermiquement, des diluants réactifs pouvant durcir grâce à un rayonnement actinique, des agents adhésifs, des agents d'écoulement, des additifs filmogènes, des agents antimousses, des émulsifiants, des tensioactifs et des dispersants, des additifs régulateurs de la rhéologie (épaississants), des agents ignifugeants, des inhibiteurs de corrosion, des cires et des agents de matification.

18. Procédé de préparation d'une substance de revêtement aqueuse essentiellement ou complètement exempte de substances organiques volatiles selon l'une des revendications 1 à 17, **caractérisé en ce que** :
(I) au moins une dispersion aqueuse primaire (A), contenant des particules polymères solides et/ou liquides, dispersées et/ou émulsionnées, et/ou des particules noyau-enveloppe solides dispersées d'un diamètre de particule ≤ 500 nm sont préparées par polymérisation par voie radicalaire en microémulsion ou miniémulsion d'au moins un monomère oléfiniquement insaturé en présence d'au moins un additif hydrophobe, est préparée,
(II) au moins une dispersion polyuréthanne aqueuse secondaire (B), contenant au moins un polyuréthanne et au moins un produit de protection contre la lumière, sélectionné parmi le groupe des amorceurs de radicaux régénérables, est préparée, et
(III) les dispersions (A) et (B) sont mélangées l'une avec l'autre.

19. Procédé selon la revendication 18, **caractérisé en ce qu'**au moins un additif typique de la peinture est ajouté aux dispersions (A) et/ou (B) avant, pendant et/ou après leur mélange.

20. Utilisation de la substance de revêtement selon l'une quelconque des revendications 1 à 16 et/ou de la substance de revêtement préparée selon la revendication 18 ou 19 pour la peinture initiale des automobiles, la peinture de bâtiments en intérieur et en extérieur, la peinture de portes, de fenêtres et de meubles, la peinture industrielle, ce qui inclut le couchage sur bande, le couchage sur conteneur, et l'imprégnation et/ou le revêtement de composants électrotechniques, ainsi que la peinture de produits blancs, ce qui inclut les appareils ménagers, les chaudières et les radiateurs.

21. Utilisation selon la revendication 20, **caractérisée en ce que** la substance de revêtement est utilisée en tant que peinture transparente ou en tant que peinture à base d'eau.

22. Utilisation selon la revendication 20 ou 21, **caractérisée en ce que** la substance de revêtement sert à la fabrication de peintures en plusieurs couches, colorantes et/ou à effet.

23. Utilisation de la substance de revêtement selon l'une quelconque des revendications 1 à 16 et/ou de la substance de revêtement préparée selon la revendication 18 ou 19 en tant que colle ou produit d'étanchéité.
